# EUROPÄISCHE PATENTANMELDUNG

(11) **EP 4 304 065 A1**
(43) Veröffentlichungstag der Anmeldung: **10.01.2024**
(21) Anmeldenummer: 23183220.5
(22) Anmeldetag: 04.07.2023
(51) Int. Cl.: H02K 41/03, H02K 16/04, F16F 6/00

(54) **KONSTANTKRAFTGEBER**

(30) Priorität: 06.07.2022 EP 22183245
(71) Anmelder: NTI AG, 8957 Spreitenbach (CH)
(72) Erfinder: ROHNER, Ronald, 5453 Remetschwil (CH); AUSDERAU, Daniel, 8500 Frauenfeld (CH)
(74) Vertreter: Bohest AG

(57) **Zusammenfassung**

Ein Konstantkraftgeber umfasst:
- einen Stator (2), der eine Längsachse (22) sowie einen permanentmagnetischen Statorbereich (20) aufweist; und
- einen in Richtung der Längsachse relativ zum Stator bewegbar angeordneten Läufer (1), der einen permanentmagnetischen Läuferbereich (7) aufweist.

Der permanentmagnetische Statorbereich (20) und der permanentmagnetische Läuferbereich (7) ist jeweils in einer Magnetisierungsrichtung magnetisiert, die senkrecht zur Richtung der Längsachse (22) ist. Der permanentmagnetische Statorbereich (20) und der permanentmagnetische Läuferbereich (7) sind in der Richtung der Längsachse lediglich teilweise überlappend angeordnet, so dass eine zwischen dem permanentmagnetischen Statorbereich (20) und dem permanentmagnetischen Läuferbereich (7) wirkende magnetische Kraft eine Nettokraftkomponente in der Richtung der Längsachse (22) aufweist.

Der permanentmagnetische Läuferbereich (7) weist einen ersten Teilbereich (71) auf, der eine Magnetisierung aufweist, die eine Nettomagnetisierungskomponente in einer Richtung (30) entgegengesetzt zu der Magnetisierungsrichtung (31) des permanentmagnetischen Statorbereichs (20) aufweist,
so dass im Fall einer lediglich teilweise überlappenden Anordnung des ersten Teilbereichs (71) und des permanentmagnetischen Statorbereichs (20) die Nettokraftkomponente eine abstossende Nettokraftkomponente (50) umfasst, die den Läufer in Richtung der Längsachse (22) vom Stator (2) weg abstösst.

## Beschreibung

Die vorliegende Erfindung betrifft einen Konstantkraftgeber gemäss Anspruch 1 sowie ein Linearantriebssystem gemäss Anspruch 13.

Linearantriebssysteme werden zum Bewegen von Massen entlang einer (typischerweise) geraden Wegstrecke eingesetzt. Wenn die gerade Wegstrecke ausschliesslich in horizontaler Richtung verläuft, muss die vom Linearantriebssystem aufgebrachte Kraft typischerweise nur der Trägheit der Masse sowie Reibungskräften entgegenwirken. Wenn die gerade Wegstrecke jedoch in vertikaler Richtung verläuft oder zumindest eine Steigung aufweist, muss das Linearantriebssystem eine zusätzliche Kraft aufbringen, um der auf die Masse wirkenden Gewichtskraft entgegenzuwirken, selbst wenn die Masse in Ruhe ist. Bei einem elektromagnetisch betriebenen Linearantriebssystem muss in diesem Fall dessen Linearmotor kontinuierlich bestromt werden, um der Gewichtskraft entgegenzuwirken, die auf eine an das Linearantriebssystem angekoppelte Masse wirkt, und um die Masse somit in Ruhe zu halten. Durch die kontinuierliche Bestromung des Linearmotors wird der Linearmotor zusätzlich belastet und es entstehen im Linearmotor Verluste (beispielsweise durch Wärme). Die erforderliche (konstante) Kraft, die nur dazu dient, der Gewichtskraft entgegenzuwirken, kann im Verhältnis zu der für die Bewegung der Masse erforderlichen Kraft unverhältnismässig gross sein.

Um zu vermeiden, dass der Linearmotor des Linearantriebssystems speziell ausgebildet sein muss, nur um die zusätzliche konstante Kraft zum Entgegenwirken der Gewichtskraft aufbringen zu können, gibt es diverse Lösungen, eine der Gewichtskraft entgegenwirkende Kraft durch eine zusätzliche Vorrichtung zu erzeugen. Derartige Lösungen umfassen krafterzeugende Elemente wie Gegengewichte, mechanische Federn sowie pneumatische Systeme.

Eine weitere Lösung ist ein Konstantkraftgeber, bei dem die Gewichtskraft durch eine magnetische Anziehungskraft zwischen in gleicher Richtung magnetisierter permanentmagnetischer Bereiche bzw. zwischen einem permanentmagnetischen Bereich und einem magnetisch leitenden Bereich (z.B. ferromagnetischen Bereich) mit einer der Gewichtskraft entgegengesetzten Nettokraftkomponente kompensiert wird. Ein derartiger passiver Konstantkraftgeber hat zum Vorteil, dass weder elektrische Leistung aufgebracht werden muss, um die Wirkung der Gewichtskraft zu kompensieren, noch treten hohe mechanische Belastungen auf, die zu übermässigem Verschleiss führen.

Einen anderen Anwendungsfall für einen Konstantkraftgeber stellt beispielsweise ein Prozess dar, bei dem vom Motor eine konstante Kraft, z.B. zum Drücken gegen eine Schliessfeder, aufgebracht werden muss, die anstelle vom Motor durch den Konstantkraftgeber aufgebracht wird. Ausserdem kann ein mit dem Motor mechanisch gekoppelter Konstantkraftgeber insofern von Vorteil sein, als bei einem Stromausfall der Läufer durch die magnetisch Kraft des Konstantkraftgebers automatisch in eine gewünschte Endposition (z.B. in eine sichere Lage) bewegt werden kann. Abhängig von der Art der Ausführung des Konstantkraftgebers und der Kopplungsart mit dem Motor kann im stromlosen Fall eine stossende Konstantkraft den Läufer nach vorne schieben oder eine ziehende Konstantkraft den Läufer zurückziehen.

In der EP 1 378 986 A1 ist ein solcher Konstantkraftgeber beschrieben. Bei diesem Konstantkraftgeber wird ein Läufer des Konstantkraftgebers in einem Stator des Konstantkraftgebers geführt, wobei sowohl der Läufer als auch der Stator jeweils einen permanentmagnetischen Bereich oder zumindest magnetisch leitenden Bereich aufweist. Aufgrund einer zwischen den permanentmagnetischen bzw. magnetisch leitenden Bereichen des Läufers und des Stators wirkenden magnetischen Anziehungskraft wird der Läufer in Richtung des Stators hin angezogen. Hierbei ist der permanentmagnetische bzw. magnetisch leitende Bereich des Stators derart ausgebildet, dass das resultierende Magnetfeld nur in einem Bereich eines Längsendes dieses Bereichs des Stators inhomogen ist, sodass der innerhalb des Stators geführte Teil des Läufers nur geringe oder keine magnetischen Kräfte erfährt. Der Läufer wird somit nur an einem aus dem permanentmagnetischen bzw. magnetisch leitenden Bereich des Stators herausragenden Teilabschnitt des Läufers, der sich in dem Bereich des einen Längsendes des Stators befindet, in den Stator hineingezogen. Folglich ist die Kraft, die der Konstantkraftgeber mittels des Läufers weitergibt, stets entgegen der Richtung gerichtet, in der der Läufer aus dem Stator bzw. dessen magnetischen Bereichs herausragt. Dies ist ungünstig, insbesondere hinsichtlich des benötigten Bauraums für Anwendungen, in denen der Läufer eine stossende Konstantkraft bereitstellen soll. Des Weiteren werden dadurch die Möglichkeiten der Anordnung des Konstantkraftgebers relativ zum Antriebsmotor innerhalb des Linearantriebssystems limitiert. Ein weiterer Nachteil eines ausschliesslich auf einer anziehenden magnetischen Kraft basierenden Konstantkraftgebers besteht darin, dass die anziehende magnetische Kraft nur auf derjenigen Seite des Stators, auf der der Läufer herausragt, auf den Läufer wirken kann (also immer nur auf einer von beiden Seiten), was die maximal auf den Läufer wirkende Kraft limitiert. Als weiterer Nachteil ergibt sich, dass der maximale Hub bei einem ausschliesslich auf einer anziehenden magnetischen Kraftwirkung basierenden Konstantkraftgeber auf die Länge der jeweiligen magnetischen Bereiche limitiert ist.

Vor diesem Hintergrund liegt der Erfindung die Aufgabe zugrunde, einen Konstantkraftgeber und ein Linearantriebssystem bereitzustellen, um die oben genannten Nachteile zu beseitigen.

Diese Aufgabe wird durch einen erfindungsgemässen Konstantkraftgeber sowie ein erfindungsgemässes Linearantriebssystem gelöst, wie sie in durch die Merkmale der unabhängigen Ansprüchen 1 und 13 definiert sind. Besonders vorteilhafte Aspekte des erfindungsgemässen Kontaktkraftgebers und des erfindungsgemässen Linearantriebssystems sind Gegenstand der jeweiligen abhängigen Ansprüche.

Der erfindungsgemässe Konstantkraftgeber, insbesonder ein tubularer Konstantkraftgeber, umfasst einen Stator, der eine Längsachse sowie einen permanentmagnetischen Statorbereich aufweist, wobei der permanentmagnetische Statorbereich ein erstes Längsende aufweist sowie ein zweites Längsende, das dem ersten Längsende axial gegenüberliegt. Der Konstantrkraftgeber weist weiterhin einen in Richtung der Längsachse über einen Hub relativ zum Stator bewegbar angeordneten Läufer, der einen permanentmagnetischen Läuferbereich aufweist. Der permanentmagnetische Statorbereich und zumindest teileweise auch der permanentmagnetische Läuferbereich ist jeweils in einer Magnetisierungsrichtung magnetisiert, die senkrecht zur Richtung der Längsachse ist. Der permanentmagnetische Statorbereich und der permanentmagnetische Läuferbereich sind über den gesamten Hub des Läufers in der Richtung der Längsachse lediglich teilweise überlappend angeordnet (ein Teil des permanentmagnetischen Läuferbereichs überlappt also stets nicht mit dem permanentmagnetischen Statorbereich), so dass eine zwischen dem permanentmagnetischen Statorbereich und dem permanentmagnetischen Läuferbereich wirkende magnetische Kraft eine über den gesamten Hub konstante Nettokraftkomponente in der Richtung der Längsachse aufweist. Der permanentmagnetische Läuferbereich weist dabei einen ersten Teilbereich auf, der eine Magnetisierung aufweist, die eine Nettomagnetisierungskomponente in einer Richtung entgegengesetzt zu der Magnetisierungsrichtung des permanentmagnetischen Statorbereichs aufweist, so dass im Fall einer lediglich teilweise überlappenden Anordnung dieses ersten Teilbereichs und des permanentmagnetischen Statorbereichs derart, dass ein Längsabschnitt des ersten Teilbereichs in der Richtung der Längsachse ausschliesslich am ersten Längsende des permanentmagnetischen Statorbereichs aus dem permanentmagnetischen Statorbereich herausragt, die über den gesamten Hub konstante Nettokraftkomponente eine abstossende konstante Nettokraftkomponente umfasst, die den Läufer in der Richtung der Längsachse vom ersten Längsende des Stators weg abstösst.

Im Unterschied zu bekannten Konstantkraftgebern weist der erfindungsgemässe Konstantkraftgeber also einen Längsabschnitt des ersten Teilbereichs des permanentmagnetischen Läuferbereichs auf, mit dem eine abstossende konstante Nettokraftkomponente erzeugt werden kann. Diese abstossende konstante Nettokraftkomponente wird immer dann erzeugt, wenn der Längsabschnitt des ersten Teilbereichs des permanentmagnetischen Läuferbereichs ausschliesslich am ersten Längsende des permanentmagnetischen Statorbereichs aus dem permanentmagnetischen Statorbereich herausragt. Dabei gibt es konstruktive Varianten des erfindungsgemässen Konstantkraftgebers, bei denen der Längsabschnitt des ersten Teilbereichs unabhängig von der Läuferposition über den gesamten Hub des Läufers immer lediglich teilweise mit dem permanentmagnetischen Statorbereich überlappt (so dass die abstossende konstante Nettokraftkomponente unabhängig von der aktuellen Läuferposition immer erzeugt wird), als auch solche konstruktive Varianten, bei denen dies nicht über den gesamten Hub des Läufers der Fall ist (und somit die auf den Läufer wirkende magnetische Konstantkraft je nach aktueller Läuferposition nicht immer nur durch die abstossende konstante Nettokraftkomponente erzeugt wird). In jedem Fall wird bei dem erfindungsgemässen Konstantkraftgeber die abstossende konstante Nettokraftkomponente aber immer in gewissen Läuferpositionen erzeugt, wenn der Läufer über seinen gesamten Hub verfahren wird.

Der Läufer des Konstantkraftgebers kann mit dem Motorläufer eines Linearmotors eines Linearantriebssystems gekoppelt sein, z.B. zum Bewegen einer Masse, auf die eine Gewichtskraft wirkt. Die abstossende konstante Nettokraftkomponente, die den Läufer in Richtung der Längsachse vom ersten Längsende des Stators weg abstösst, wird hierbei auf den Antriebsläufer des Linearantriebsystems übertragen und dient zur Kompensation der auf die Masse wirkenden Gewichtskraft. Somit ist die abstossende konstante Nettokraftkomponente, und damit die Richtung, in die der Läufer vom ersten Längsende des Stators weg abgestossen wird, entgegengesetzt zur Richtung der auf die Masse wirkenden Gewichtskraft.

Zum Bewegen der Masse ist der Läufer des Konstantkraftgebers zwischen einer vollständig eingefahrenen Position und einer vollständig ausgefahrenen Position bewegbar (maximaler Hub des Läufers). Dabei ist in jeder Läuferposition (also sowohl in der vollständig eingefahrenen Position, als auch in der vollständig ausgefahrenen Position, als auch in jeder Läuferposition zwischen der vollständig eingefahrenen und der vollständig ausgefahrenen Position) immer ein Teil des permanentmagnetischen Läuferbereichs nicht überlappend mit dem permanentmagnetischen Statorbereich angeordnet. Somit ist also über den Hub des Läufers der (gesamte) permanentmagnetische Läuferbereich immer lediglich teilweise mit dem permanentmagnetischen Statorbereich überlappend angeordnet. Und sofern dieser lediglich teilweise mit dem permanentmagnetischen Statorbereich überlappende Teil des permanentmagnetischen Läuferbereichs der erste Teilbereich ist, dessen Magnetisierungsrichtung entgegengesetzt zu der Magnetisierungsrichtung der permanentmagnetischen Statorbereichs ist, sodass ein Längsabschnitt des ersten Teilbereichs ausschliesslich am ersten Längsende des permanentmagnetischen Statorbereichs aus dem permanentmagnetischen Statorbereich herausragt, wird die abstossende konstante Nettokraftkomponente erzeugt. Der (gesamte) permanentmagnetische Läuferbereich kann jedoch zusätzlich zu dem ersten Teilbereich noch weitere Teilbereiche aufweisen, die auch permanentmagnetisch sein können, die aber auch aus einem magnetisch leitenden Material bestehen können, wie noch näher erläutert wird.

Für den Fall, dass der (gesamte) permanentmagnetische Läuferbereich ausschliesslich aus dem ersten Teilbereich besteht, dessen Magnetisierung eine Nettomagnetisierungskomponente in einer Richtung entgegengesetzt zur Magnetisierungsrichtung des permanentmagnetischen Statorbereichs aufweist, wird in jeder Läuferposition die abstossende konstante Nettokraftkomponente erzeugt. Hier überlappen in der vollständig eingefahrenen Position der erste Teilbereich und der permanentmagnetische Statorbereich in Richtung der Längsachse fast vollständig, bis auf einen im Vergleich zur Länge des ersten Teilbereichs kurzen nicht-überlappenden Teil, wobei die auf den Läufer wirkende abstossende konstante Nettokraftkomponente in Richtung der Längsachse genau an diesem kurzen nicht-überlappenden Teil (also an dem Längsabschnitt des ersten Teilbereichs, der aus dem ersten Längsende des permanentmagnetischen Statorbereich sherausragt) am Läufer angreift. Die Länge des nicht-überlappenden Teils (also des Längsabschnitts, der aus dem ersten Längsende des permanentmagnetischen Statorbereichs herausragt) entspricht in der vollständig eingefahrenen Position typischerweise dem 1-fachen bis 2-fachen des Läuferdurchmessers und hängt von der Geometrie, dem Aufbau sowie der geforderten Toleranz der Konstantkraft ab.

In der vollständig ausgefahrenen Position sind der permanentmagnetische Statorbereich und der erste Teilbereich fast vollständig in Richtung der Längsachse zueinander versetzt, bis auf einen kurzen überlappenden Teil. Durch den kurzen überlappenden Teil wird erreicht, dass die abstossende konstante Nettokraftkomponente in Richtung der Längsachse nicht durch Randeffekte, die an einem Längsende des ersten Teilbereichs auftreten könnten (nämlich wenn der erste Teilbereich vollständig aus dem permanentmagnetischen Bereich des Stators herausgefahren wäre), reduziert wird. Die Länge des überlappenden Bereichs entspricht typischerweise dem 0.1-fachen bis 1-fachen des Läuferdurchmessers und hängt von der Geometrie, dem Aufbau sowie der geforderten Toleranz der Konstantkraft ab.

Der maximale Hub des Läufers entspricht in diesem Fall somit im Wesentlichen der Länge des permanentmagnetischen Statorbereichs oder des ersten Teilbereichs - bzw. des kürzeren der beiden Bereiche bei unterschiedlichen Längen, abzüglich der Länge des besagten überlappenden bzw. nicht-überlappenden Teils. Um die permanentmagnetischen Bereiche nach Möglichkeit vollständig zur Erzeugung einer konstanten Kraft nutzen zu können, ist der erste Teilbereich (des permanentmagnetischen Läuferbereichs) vorzugsweise etwas länger (etwa 1-facher bis 2-facher Läuferdurchmesser) als der permanentmagnetische Statorbereich.

Dadurch, dass die Magnetisierungsrichtung des permanentmagnetischen Statorbereichs und die Richtung der Nettomagnetisierungskomponente der Magnetisierung des ersten Teilbereichs (als Teil oder Ganzes des permanentmagnetischen Läuferbereichs) jeweils senkrecht zu der Richtung der Längsachse und entgegengesetzt zueinander sind, wird zum einen erreicht, dass eine abstossende magnetische Kraft zwischen dem ersten Teilbereich und dem permanentmagnetischen Statorbereich wirkt. Zum anderen wird dadurch ermöglicht, dass auch bei einer Bewegung des Läufers relativ zum Stator die abstossende Nettokraftkomponente konstant bleibt. Der Begriff 'senkrecht relativ zu der Richtung der Längsachse' in Bezug auf die Magnetisierungsrichtung umfasst dabei auch Abweichungen von einer exakt senkrechten Richtung relativ zur Längsachse, wie beispielsweise eine Abweichung von jeweils +/- 20° (von der exakt senkrechten Richtung). Der Begriff 'entgegengesetzt zueinander' in Bezug auf die Magnetisierungsrichtungen umfasst ebenfalls Fälle, bei denen für die jeweilige Anwendung eine ausreichend konstante abstossende Nettokraftkomponente erzeugt wird, wie beispielsweise bei Abweichungen von jeweils +/-20° von einer exakt entgegengesetzten Magnetisierungsrichtung.

Der permanentmagnetische Statorbereich ist typischerweise derart ausgebildet, dass die Stärke der Magnetisierung in Richtung der Längsachse betrachtet über die Länge des permanentmagnetischen Statorbereichs konstant ist, um ein Magnetfeld zu erzeugen, das in der Richtung der Längsachse betrachtet über die Länge des permanentmagnetischen Statorbereichs homogen ist und vom ersten Längsende sowie vom zweiten Längsende des permanentmagnetischen Statorbereichs weg entlang der Längsachse betrachtet abfällt. Das Magnetfeld ist dort also inhomogen. Die Stärke der Magnetisierung des ersten Teilbereichs des permanentmagnetischen Läuferbereichs ist in der Richtung der Längsachse betrachtet über die Länge des ersten Teilbereichs der permanentmagnetischen Läuferbereichs konstant. Zwischen der vollständig eingefahrenen und der vollständig ausgefahrenen Position des Läufers (also über den gesamten Hub) befindet sich dann stets ein (gleich langer) Längsabschnitt des ersten Teilbereichs in diesem inhomogenen Magnetfeld. Dadurch wirkt eine konstante Nettokraftkomponente in Richtung der Längsachse auf diesen Längsabschnitt des ersten Teilbereichs und somit auf den Läufer, die den Läufer in Richtung der Längsachse vom ersten Längsende des Stators weg abstösst.

Das kann konstruktionstechnisch von Vorteil sein und Bauraum einsparen in einer Anwendung, in der der Konstantkraftgeber zum Stossen benutzt wird. In einer solchen Anwendung muss der Läufer dann nicht - wie bei einem ausschliesslich auf einer anziehenden Magnetkraft basierenden Konstantkraftgeber, wie er in EP 1 378 986 beschrieben ist - durch den Stator hindurch verlängert werden, um die Stosskraft nutzen zu können.

Weiterhin ermöglicht ein auf einer abstossenden magnetischen Kraft basierender Konstantkraftgeber in Kombination mit einem (permanentmagnetischen) zweiten Teilbereich des permanentmagnetischen Läuferbereichs, der mit dem permanentmagnetischen Statorbereich in anziehender Weise wechselwirkt, eine Erhöhung der vom Konstantkraftgeber erzeugbaren konstanten Kraft oder eine Vergrösserung des maximalen Hubs des Läufers, wie noch erläutert wird.

Gemäss einem Aspekt des erfindungsgemässen Konstantkraftgebers ist die Richtung der Magnetisierung des ersten Teilbereichs des permanentmagnetischen Läuferbereichs entgegengesetzt zu der Magnetisierungsrichtung des permanentmagnetischen Statorbereichs. Bei dieser genau entgegengesetzten Richtung der Magnetisierungen des permanentmagnetischen Statorbereichs und des ersten Teilbereichs wird für eine vorbestimmte Stärke der Magnetisierung die maximal mögliche abstossende konstante Nettokraftkomponente erzeugt, die den Läufer in Richtung der Längsachse vom ersten Längsende des Stators weg abstösst..

Es kann aber auch erwünscht sein, dass eine geringere als die maximal mögliche abstossende Konstantkraft erzeugt werden soll, ohne dass dazu ein (vom konstruktiven Aufbau her) anderer Konstantkraftgeber erforderlich ist. Entsprechend schliessen gemäss einem weiteren Aspekt des erfindungsgemässen Konstantkraftgebers die Richtung der Magnetisierung des ersten Teilbereichs des permanentmagnetischen Läuferbereichs und die Magnetisierungsrichtung des permanentmagnetischen Statorbereichs einen stumpfen (bezüglich der Längsachse azimutalen) Winkel ein (die Richtung der Magnetisierung des ersten Teilbereichs verläuft also unter einem stumpfen Winkel 'schräg' zur Magnetisierungsrichtung des permanentmagnetischen Statorbereichs). Dadurch wirkt nur die Nettomagnetisierungskomponente der Magnetisierung des ersten Teilbereichs, die (genau) entgegengesetzt zur Magnetisierungsrichtung des permanentmagnetischen Statorbereichs verläuft, kraftbildend bei der Erzeugung der (in axialer Richtung wirkenden) abstossenden Konstantkraft. Dies ermöglicht eine Einstellmöglichkeit der Stärke der erzeugten Konstantkraft über die Grösse des eingeschlossenen stumpfen Winkels, was sich konstruktiv einfach lösen lässt (z.B. mit Hilfe einer entsprechenden Führung und Verdrehsicherung), was analog nachfolgend auch für den Fall einer zusätzlichen anziehenden Konstantkraft gilt.

Gemäss einem Aspekt des erfindungsgemässen Konstantkraftgebers weist der permanentmagnetische Läuferbereich einen zweiten Teilbereich auf, der entweder permanentmagnetisch ausgebildet ist und eine Magnetisierung aufweist, die eine Nettomagnetisierungskomponente in einer Richtung identisch mit der Magnetisierungsrichtung des permanentmagnetischen Statorbereichs aufweist, oder der aus einem magnetisch leitenden Material besteht. Unter einem 'magnetisch leitenden Material' wird hier ein Material verstanden mit einer relativen magnetischen Permeabilität (Permeabilitätszahl) von µᵣ >> 1 (wie beispielsweise bei ferromagnetischen Materialien). Im Fall einer lediglich teilweise überlappenden Anordnung des zweiten Teilbereichs und des permanentmagnetischen Statorbereichs derart, dass ein Längsabschnitt des zweiten Teilbereichs in der Richtung der Längsachse ausschliesslich am zweiten Längsende des permanentmagnetischen Statorbereichs herausragt, umfasst dann die über den gesamten Hub konstante Nettokraftkomponente eine anziehende konstante Nettokraftkomponente, die den Läufer in Richtung der Längsachse zum zweiten Längsende des Statosr hin anzieht, wobei die anziehende und die abstossende konstante Nettokraftkomponente in die gleiche Richtung weisen.

Im Fall der lediglich teilweise überlappenden Anordnung des ersten Teilbereichs und des permanentmagnetischen Statorbereichs ragt ein Längsabschnitt des ersten Teilbereichs in der Richtung der Längsachse aus dem ersten Längsende heraus, so dass die abstossende Nettokraftkomponente an dem herausragenden Längsabschnitt des ersten Teilbereichs angreift.

Im Fall der lediglich teilweise überlappenden Anordnung des zweiten Teilbereichs und des permanentmagnetischen Statorbereichs derart, dass ein Längsabschnitt des zweiten Teilbereichs in der Richtung der Längsachse ausschliesslich am zweiten Längsende des permanentmagnetischen Statorbereichs aus dem permanentmagnetischen Statorbereich herausragt, greift die anziehende konstante Nettokraftkomponente am herausragenden Längsabschnitt des zweiten Teilbereichs an.

Dies kann je nach konstruktiver Ausgestaltung dazu genutzt werden, die vom Konstantkraftgeber erzeugbare Konstantkraft zu erhöhen (wenn nämlich die anziehende und die abstossende Nettokraftkomponente gleichzeitig wirken: Die abstossende Nettokraftkomponente am ersten Längsende und die anziehende Nettokraftkomponente am zweiten Längsende des permanentmagnetischen Statorbereichs). Oder es kann - bei gleichbleibender Konstantkraft - zu einer Vergrösserung des maximal möglichen Hubs des Läufers genutzt werden (wenn nämlich jeweils entweder nur die anziehende oder nur die abstossende Nettokraftkomponente bzw. in einem Übergangsbereich gleichzeitig - aufgrund des Kraftanstiegs bzw, Kraftabfalls jeweils etwas geringere - anziehende und abstossende Nettokraftkomponente am zweiten bzw. ersten Längsende des permanentmagnetischen Statorbereichs wirken).

Eine derartige Anordnung des Längsabschnitts des ersten Teilbereichs bzw. des zweiten Teilbereichs hat zur Folge, dass entweder der erste Teilbereich oder der zweite Teilbereich (oder beide) mit dem permanentmagnetischen Statorbereich einerseits teilweise überlappt. Andererseits ragt gleichzeitig mit der Überlappung auch immer ein Längsabschnitt des ersten Teilbereichs bzw. des zweiten Teilbereichs aus dem ersten bzw. dem zweiten Längsende des permanentmagnetischen Statorbereichs heraus, sodass entweder die entsprechende abstossende oder die anziehende Nettokraftkomponente (oder beide) erzeugt werden.

Dadurch, dass die abstossende Kraftkomponente und die anziehende Kraftkomponente an gegenüberliegenden Längsenden des permanentmagnetischen Statorbereichs an den dort herausragenden Längsabschnitten angreifen, wirken beide Nettokraftkomponenten in die gleiche Richtung.

Gemäss einem Aspekt des erfindungsgemässen Konstantkraftgebers ist im Fall, dass der zweite Teilbereich des permanentmagnetischen Läuferbereichs permanentmagnetisch ausgebildet ist, die Stärke der Magnetisierung des zweiten Teilbereichs bezüglich der Richtung der Längsachse betrachtet über dessen Länge konstant,
und im Fall, dass der zweite Teilbereich des permanentmagnetischen Läuferbereichs magnetisch leitend ausgebildet ist, ist die magnetische Leitfähigkeit des zweiten Teilbereichs über dessen Länge in der Richtung der Längsachse betrachtet konstant. Gemäss einem weiteren Aspekt des erfindungsgemässen Konstantkraftgebers sind der erste Teilbereich und der zweite Teilbereich des permanentmagnetischen Läuferbereichs in Richtung der Längsachse in einem Abstand voneinander angeordnet, der kleiner ist als (etwa) 90% der Länge des permanentmagnetischen Statorbereichs.

Dies hat den Vorteil, dass die abstossende und die anziehende konstante Nettokraftkomponente gleichzeitig auf den Läufer wirken. Dabei entspricht die auf den Läufer wirkende Kraft der Summe der anziehenden und der abstossenden konstanten Nettokraftkomponente. Der Hub des Läufers, während dem auf den Läufer die Summe der beiden konstanten Nettokraftkomponenten wirkt, entspricht in diesem Fall der Länge des permanentmagnetischen Statorbereichs abzüglich des Abstands des ersten permanentmagnetischen Teilbereichs und des zweiten Teilbereichs voneinander in Richtung der Längsachse. Das bedeutet, dass der Abstand zwischen dem ersten Teilbereich und dem zweiten Teilbereich möglichst klein ist im Sinne eines möglichst grossen Hubs, bei dem sowohl die anziehende als auch die abstossende konstante Nettokraftkomponente wirken. Der Abstand kann prinzipiell sogar null sein, zumindest wenn der erste Teilbereich und der zweite Teilbereich beide permanentmagnetisch ausgebildet sind, sie stossen in diesem Fall aneinander. Aber es kann auch eine Distanzscheibe (idealerweise aus einem magnetisch nichtleitenden Material) zwischen den beiden Teilbereichen angeordnet sein. Dies kann beispielsweise aus fertigungstechnischen Gründen sinnvoll sein, da auf diese Weise ein Aufeinanderprallen der Magnete der beiden permanentmagnetischen Teilbereiche bei der Montage vermieden werden kann, was andernfalls zu einer Beschädigung der spröden Magnete führen könnte.

Gemäss einem weiteren (alternativen) Aspekt des erfindungsgemässen Konstantkraftgebers sind der erste Teilbereich und der zweite Teilbereich des permanentmagnetischen Läuferbereichs in Richtung der Längsachse in einem Abstand voneinander angeordnet, der im Wesentlichen gleich ist wie die Länge des permanentmagnetischen Statorbereichs. Darunter ist eine Länge zu verstehen, die um bis zu ± 1 Läuferdurchmesser (einen Läuferdurchmesser für den Fall eines tubularen Konstantkraftgebers) von der Länge des permanentmagnetischen Statorbereichs abweichen kann.

Dies hat den Vorteil, dass die anziehende und die abstossende konstante Nettokraftkomponente quasi nacheinander auf den Läufer wirken. Wenn während der Bewegung des Läufers der erste Teilbereich oder der zweite Teilbereich aufhört, mit dem permanentmagnetischen Statorbereich zu überlappen, beginnt der jeweils andere des ersten Teilbereichs und des zweiten Teilbereichs mit dem permanentmagnetischen Statorbereich des Stators zu überlappen. Es befindet sich somit - mit Ausnahme eines Übergangsbereichs - stets ein Längsabschnitt entweder des ersten Teilbereichs oder des zweiten Teilbereichs an einem der ersten und zweiten Längsenden des permanentmagnetischen Statorbereichs (also im inhomogenen Magnetfeld). Dadurch wirkt immer entweder (nur) die abstossende oder (nur) die anziehende konstante Nettokraftkomponente auf den Läufer. In dem Übergangsbereich, in dem sich sowohl der erste als auch der zweite Teilbereich teilweise in den inhomogenen Magnetfeldbereichen an den Enden des permanentmagnetischen Statorbereichs befinden, wirkt jeweils ein Teil der Konstantkraft auf den ersten Teilbereich und ein Teil der Konstantkraft auf den zweiten Teilbereich, wodurch sich die beiden (Teil-)Konstankräfte zu der Konstantkraft addieren, die dann erzeugt wird, wenn sie nur von einem Teilbereich (also entweder vom ersten oder vom zweiten Teilbereich) erzeugt wird. Im Vergleich zu einem Konstantkraftgeber, der ausschliesslich auf einer anziehenden Magnetkraft basiert, kann so der maximale Hub des Läufers vergrössert werden, während dem die Konstantkraft wirkt. In Ausführungsvarianten, in denen der erste Teilbereich und der zweite Teilbereich jeweils gleich lang sind, wird der maximal mögliche Hub des Läufers somit quasi verdoppelt.

Gemäss einem weiteren Aspekt des erfindungsgemässen Konstantkraftgebers umfasst der Konstantkraftgeber einen weiteren Stator, der einen weiteren Statorbereich aufweist, der entweder permanentmagnetisch ausgebildet ist und eine Magnetisierung aufweist, die eine Nettomagnetisierungskomponente in Richtung der Magnetisierung des ersten Teilbereichs des permanentmagnetischen Läuferbereichs magnetisiert aufweist, oder der aus einem magnetisch leitenden Material besteht. Der weitere Statorbereich weist ein weiteres erstes Längsende auf sowie ein weiteres zweites Längsende, das dem weiteren ersten Längsende axial gegenüberliegt, wobei das weitere zweite Längsende des weiteren Statorbereichs dem ersten Längsende des permanentmagnetischen Statorbereichs zugewandt ist. Der erste Teilbereich des permanentmagnetischen Läuferbereichs und der weitere Statorbereich sind in der Richtung der Längsachse derart lediglich teilweise überlappend angeordnet, dass ein weiterer Längsabschnitt des ersten Teilbereichs in der Richtung der Längsachse ausschliesslich am weiteren zweiten Längsende des weiteren permanentmagnetischen Statorbereichs aus dem weiteren permanentmagnetischen Statorbereich herausragt, so dass eine zwischen dem ersten Teilbereich und dem weiteren Statorbereich wirkende magnetische Kraft eine weitere konstante Nettokraftkomponente in der Richtung der Längsachse aufweist, die den Läufer zum weiteren Stator hin anzieht, wobei die weitere konstante Nettokraftkomponente in die gleiche Richtung weist wie die abstossende konstante Nettokraftkomponente.

Dies hat zum Vorteil, dass die gesamte auf den Läufer wirkende Kraft um die weitere konstante Nettokraftkomponente erhöht werden kann, wenn nämlich auf den ersten Teilbereich (der ja permanentmagnetisch ist) durch den weiteren Statorbereich - egal, ob dieser weitere Statorbereich nun permanentmagnetisch ist oder aus einem magnetisch leitenden Material besteht - zusätzlich die weitere konstante Nettokraftkomponente wirkt. Der weitere Stator ist dabei relativ zu dem (erstgenannten) Stator ortsfest angeordnet.

Gemäss einem weiteren Aspekt des erfindungsgemässen Konstantkraftgebers ist
im Fall, dass der weitere Statorbereich permanentmagnetisch ausgebildet ist, die Stärke der Magnetisierung des permanentmagnetischen weiteren Statorbereichs über dessen Länge in der Richtung der Längsachse betrachtet konstant, um ein Magnetfeld zu erzeugen, das in der Richtung der Längsachse betrachtet über die Länge des weiteren permanentmagnetischen Statorbereichs homogen ist und vom weiteren ersten Längsende sowie vom weiteren zweiten Längsende des weiteren permanentmagnetischen Statorbereichs weg entlang der Längsachse betrachtet abfällt,
und ist im Fall, dass der weitere Statorbereich magnetisch leitend ausgebildet ist, die magnetische Leitfähigkeit des magnetisch leitenden weiteren Statorbereichs über dessen Länge in der Richtung der Längsachse betrachtet konstant.

In einer weiteren Ausführungsvariante des erfindungsgemässen Konstantkraftgebers weist der Stator im Querschnitt ein (z.B. geschlossenes) Hohlprofil mit einer Innenwand zur Führung des Läufers auf. Alternativ kann das Hohlprofil auch einseitig offen sein, wobei dann aber die Führung des Läufers so gewährleistet sein muss, dass der Läufer nicht aus der offenen Seite des Hohlprofils entweichen kann.

Als Querschnitt wird hierbei ein Schnitt entlang einer Ebene senkrecht zur Längsachse des Stators verstanden. Der Läufer ist dabei derart geführt, dass er in einer solchen Ebene senkrecht zur Längsachse praktisch nicht bewegbar ist. Die Bewegbarkeit des Läufers in Richtung der Längsachse ist hingegen nicht beeinträchtigt. Zu diesem Zweck kann der Läufer in einer Gleiteinlage (z.B. aus Polyoxymethylen, POM) geführt sein. Bei einem Stator mit eckigem Hohlprofil und einem entsprechenden Querschnittsprofil des Läufers kann auch eine Rotation des Läufers um die Längsachse verhindert werden.

Wie bereits erwähnt, ist der erfindungsgemässen Konstantkraftgeber insbesondere r ein tubularer Konstantkraftgeber.

Ein tubularer Konstantkraftgeber weist im Querschnitt ein kreiszylindrisches Hohlprofil (Innenprofil) des Stators sowie ein entsprechendes kreiszylindrisches Aussenprofil des Läufers auf. Dies sind sehr gängige Formen von Läufer und Stator, die sich einfach und zuverlässig herstellen lassen.

Gemäss einem weiteren Aspekt der erfindungsgemässen Konstantkraftgebers umfasst der Konstantkraftgeber eine Sicherungsvorrichtung gegen eine Rotation des Läufers relativ zum Stator um die Längsachse.

Miteinander wechselwirkende Magneten richten sich - sofern möglich - so zueinander aus, dass ihre Magnetisierungsrichtungen in die gleiche Richtung weisen (so dass die Magneten sich anziehen). Bei einem auf abstossenden magnetischen Kräften basierendem tubularen Konstantkraftgeber würde sich somit - sofern möglich - der Läufer in eine Position drehen, in der die Magnetisierungsrichtungen des permanentmagnetischen Läuferbereichs und des permanentmagnetischen Statorbereichs gleich sind. Eine Sicherungsvorrichtung gegen eine Rotation des Läufers um die Längsachse verhindert ein derartiges selbsttätiges (und unerwünschtes) Ausrichten des Läufers relativ zum Stator.

In einer weiteren Ausführungsvariante des erfindungsgemässen Konstantkraftgebers ist die Stärke der Magnetisierung des zweiten Teilbereichs des permanentmagnetischen Läuferbereichs (sofern dieser zweite Teilbereich permanentmagnetisch ausgebildet ist) relativ zur Stärke der Magnetisierung des ersten Teilbereichs des permanentmagnetischen Läuferbereich um 10% bis 40% reduziert.

Im Fall gleicher Abmessungen und gleicher Stärke der Magnetisierung des ersten Teilbereichs des permanentmagnetischen Läuferbereichs und des zweiten Teilbereichs des permanentmagnetischen Läuferbereichs (sofern dieser permanentmagnetisch ausgebildet ist) ist die abstossende konstante Nettokraftkomponente gegenüber der anziehenden konstanten Nettokraftkomponente um ungefähr 10-40 % reduziert. Eine entsprechende Reduktion der Stärke der Magnetisierung des zweiten Teilbereichs des permanentmagnetischen Läuferbereichs gegenüber dem ersten Teilbereich des permanentmagnetischen Läuferbereich hat zum Vorteil, dass bei gleichen Abmessungen der beiden permanentmagnetischen Bereiche die anziehende und die abstossende konstante Nettokraftkomponente betragsmässig gleich gross sind. Dies ist insbesondere für diejenige Ausführungsvariante von Vorteil, bei der der erste Teilbereich und der zweite Teilbereich des permanentmagnetischen Läuferbereichs durch einen Abstand von im Wesentlichen der Länge des permanentmagnetischen Statorbereichs voneinander getrennt sind. Dadurch ist die Konstanz der auf den Läufer ausgeübten Kraft über dessen maximalen Hub sichergestellt. Eine um 10% bis 40% reduzierte Magnetisierung des zweiten Teilbereichs kann beispielsweise durch eine Reduktion der Magnetisierungsstärke von dessen permanentmagnetischen Material oder über eine Anpassung der Geometrie (z.B. kleinerer Querschnitt des permanentmagnetischen Materials) erreicht werden. Für den Fall, dass der zweite Teilbereich aus einem magnetisch leitenden (z.B. ferromagnetischen Material besteht), kann als äquivalente Massnahme die Magnetisierung des ersten Teilbereichs zur Anpassung der Kraft entsprechend reduziert werden)

Bei derjenigen Ausführungsvariante, bei der der erste Teilebereich und der zweite Teilbereich des permanentmagnetischen Läuferbereichs durch einen Abstand voneinander getrennt sind, der kleiner ist als 90% der Länge des permanentmagnetischen Statorbereichs (und sogar möglichst klein ist bis herab zu null), bei dem also die abstossende und die anziehende Nettokraftkomponenten über den Hub des Läufers immer beide zugleich Zeit an den beiden Längsenden des Stators wirken, ist das weniger relevant: Zwar mögen bei dieser Ausführungsvariante die an den beiden Längsenden des permanentmagnetischen Statorbereichs erzeugten konstanten Nettokraftkomponenten unterschiedlich gross sein. Allerdings ist dort nur die Grösse der gesamthaft erzeugten konstanten Nettokraftkomponente (abstossende plus anziehende konstante Nettokraftkomponente) von Relevanz, nicht hingegen deren Verteilung auf die beiden Längsenden.

Gemäss einem weiteren Aspekt des erfindungsgemässen Konstantkraftgebers weist dieser ein Rückschlussrohr auf, das den permanentmagnetischen Statorbereich des Stators und/oder den weiteren permanentmagnetischen Statorbereich des weiteren Stators umschliesst. Ein solches Rückschlussrohr führt den magnetischen Fluss in dem besagten Rückschlussrohr, so dass ausserhalb des Rückschlussrohrs praktisch kein magnetisches Feld vorhanden ist.

Das erfindungsmässe Linearantriebssystem umfasst einen Linearmotor, insbesondere einen tubularen Linearmotor, der einen Motorstator umfasst mit einer Antriebslängsachse, sowie einen Motorläufer, der relativ zum Motorstator in Richtung der Antriebslängsachse bewegbar ist. Ferner umfasst das erfindungsgemässe Linearantriebssystem einen erfindungsgemässen Konstantkraftgeber, wie er vorstehend beschrieben ist.

Das erfindungsgemässe Linearantriebssystem bietet die gleichen Vorteile wie der erfindungsgemässe Konstantkraftgeber, was die Kompensation der Gewichtskraft der zu bewegenden Masse betrifft. Zusätzlich umfasst es den Linearmotor zum Bewegen der Masse.

Gemäss einem Aspekt des erfindungsgemässen Linearantriebssystems ist der Motorläufer mit dem Läufer des Konstantkraftgebers axial fest verbunden.

Gemäss einem weiteren Aspekt des erfindungsgemässen Linearantriebssystem umfasst das Linearantriebssystem mindestens zwei erfindungsgemässe Konstantkraftgeber, wobei die Läufer der mindestens zwei erfindungsgemässen Konstantkraftgeber axial fest miteinander sowie axial fest mit dem Motorläufer verbunden sind.

Weitere vorteilhafte Aspekte und Ausgestaltungen ergeben sich aus der nachfolgenden Beschreibung von Ausführungsvarianten der Erfindung mit Hilfe der schematischen Zeichnungen. Es zeigen:
- Fig. 1: einen Längsschnitt einer ersten Ausführungsvariante des erfindungsgemässen Konstantkraftgebers;
- Fig. 2: einen Querschnitt der ersten Ausführungsvariante gemäss der Linie II in Fig. 1 (Darstellung links) mit entgegengesetzter Magnetisierungsrichtung, sowie mit Magnetisierungsrichtungen, die eine stumpfen Winkel einschliessen (Darstellung rechts);
- Fig. 3: einen Querschnitt einer zweiten Ausführungsvariante des erfindungsgemässen Konstantkraftgebers;
- Fig. 4-6: einen Längsschnitt einer dritten Ausführungsvariante des erfindungsgemässen Konstantkraftgebers (verschiedene Läuferpositionen);
- Fig. 7-9: einen Längsschnitt einer vierten Ausführungsvariante des erfindungsgemässen Konstantkraftgebers (verschiedene Läuferpositionen);
- Fig. 10-13: einen Längsschnitt einer fünften Ausführungsvariante des erfindungsgemässen Konstantkraftgebers (verschiedene Läuferpositionen);
- Fig. 14-16: einen Längsschnitt einer sechsten Ausführungsvariante des erfindungsgemässen Konstantkraftgebers (verschiedene Läuferpositionen);
- Fig. 17-19: einen Längsschnitt einer siebten Ausführungsvariante des erfindungsgemässen Konstantkraftgebers (verschiedene Läuferpositionen);
- Fig. 20: einen Längsschnitt einer achten Ausführungsvariante des erfindungsgemässen Konstantkraftgebers;
- Fig. 21: eine perspektivische Ansicht einer achten Ausführungsvariante des erfindungsgemässen Konstantkraftgebers;
- Fig. 22: einen Querschnitt durch die achte Ausführungsvariante des erfindungsgemässen Konstantkraftgebers, und
- Fig. 23: eine Ansicht einer Ausführungsvariante eines erfindungsgemässen Linearantriebssystem mit einem erfindungsgemässen Konstantkraftgeber.

Die nachfolgende Beschreibung von Ausführungsvarianten mit Hilfe der einzelnen Figuren erfolgt grundsätzlich mit Hilfe von horizontalen Anordnungen, weil die Figuren auf diese Weise platzsparender angeordnet werden können. Die tatsächliche Anordnung ist aber gerade vorwiegend für nicht-horizontale Anwendungen konzipiert, weil ja bei diesen Anwendungen die Gewichtskraft einer (Last-)Masse (oder zumindest wesentliche Anteile davon) von dem Konstantkraftgeber kompensiert werden sollen.

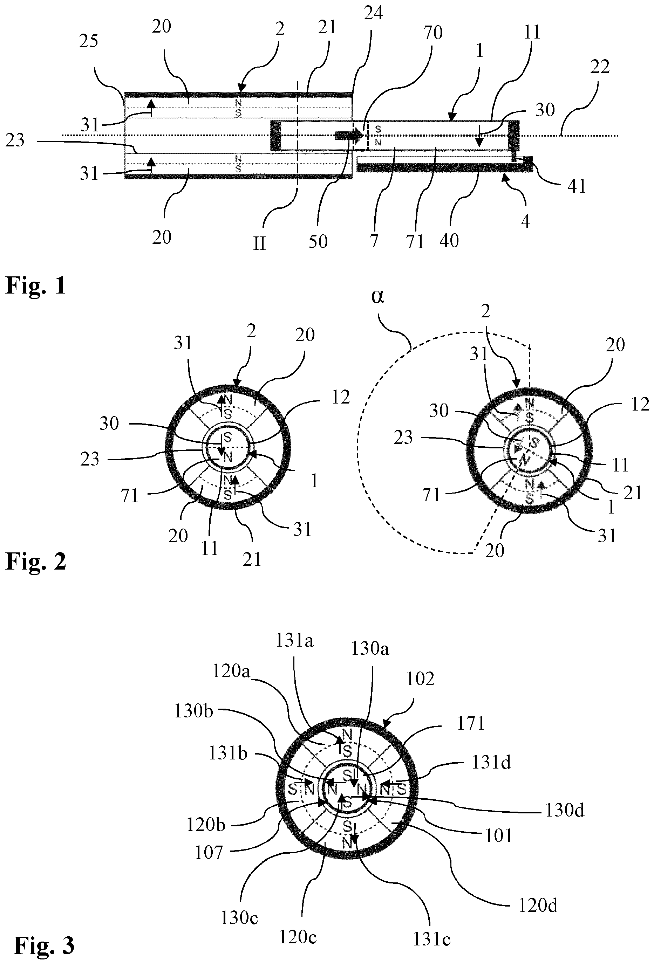

**Fig. 1** zeigt einen Längsschnitt einer ersten Ausführungsvariante des erfindungsgemässen Konstantkraftgebers, der einen (ortsfesten) Stator 2 mit einer Längsachse 22 umfasst. Der Stator 2 weist ein bezüglich der Längsachse 22 rotationssymmetrisches Hohlprofil mit einer Innenwand 23 auf. Weiterhin weist der Stator 2 einen koaxial zur Längsachse 22 angeordneten und die Innenwand 23 mindestens teilweise umgebenden permanentmagnetischen Statorbereich 20 auf. Der permanentmagnetische Statorbereich 20 ist in einer Magnetisierungsrichtung 31 senkrecht zur Längsachse 22 magnetisiert. Entsprechend sind die magnetischen Pole mit "N" für Nordpol und "S" für Südpol bezeichnet. Der Stator 2 umfasst weiterhin ein Rückschlussrohr 21 auf, welches den permanentmagnetischen Bereich 20 des Stators 2 umschliesst und aus einem magnetisch leitenden Material zur besseren Führung des magnetischen Flusses dient.

Zwischen einem ersten Längsende 24 und einem zweiten Längsende 25 des permanentmagnetischen Statorbereichs 20 ist die Stärke der Magnetisierung des permanentmagnetischen Statorbereichs 20 konstant. Folglich ist das von dem permanentmagnetischen Statorbereich 20 erzeugte Magnetfeld bezüglich der Längsachse 22 homogen. Ausserhalb des permanentmagnetischen Statorbereichs 20 nimmt die Stärke des von dem permanentmagnetischen Statorbereich 20 erzeugten Magnetfelds vom jeweiligen Längsende 24, 25 in Richtung der Längsachse 22 betrachtet ab. Ausserhalb des permanentmagnetischen Statorbereichs 20 und in der Nähe des Längsendes 24, 25 ist also das vom permanentmagnetischen Statorbereich 20 erzeugte Magnetfeld inhomogen.

Der Konstantkraftgeber umfasst ferner einen Läufer 1, der in Richtung der Längsachse 22 des Stators 2 bewegbar gelagert ist. Der Läufer 1 ist hierbei innerhalb der Innenwand 23 geführt, wozu dort eine (in den Figuren nicht gezeigte) Gleiteinlage, z.B. aus Polyoxymethylen (POM), vorgesehen sein kann. Der Läufer 1 weist einen permanentmagnetischen Läuferbereich 7 auf, der einen ersten Teilbereich 71 umfasst, der bei dieser Ausführungsvariante dem kompletten permanentmagnetischen Läuferbereich 7 entspricht. Weiterhin umfasst der Läufer 1 ein Läuferrohr 11 aus einem magnetisch nichtleitenden Material, z.B. aus Chromstahl bzw. Edelstahl, welches den permanentmagnetischen Läuferbereich 7 umschliesst.

Der erste Teilbereich 71 des permanentmagnetischen Läuferbereichs 7 ist in einer Magnetisierungsrichtung 30 senkrecht zur Längsachse 22 des Stators 2 und entgegengesetzt zur Magnetisierungsrichtung 31 des permanentmagnetischen Statorbereichs 20 magnetisiert. Ausserdem ist der erste Teilbereich 71 in Richtung der Längsachse 22 bei dieser Ausführungsvariante gleich lang wie der permanentmagnetische Statorbereich 20, und die Stärke seiner Magnetisierung ist bezüglich der Längsachse 22 konstant. Ein Längsabschnitt 70 des ersten Teilbereichs 71 befindet sich dabei in dem vom permanentmagnetischen Statorbereich 20 erzeugten inhomogenen Magnetfeld nahe des ersten Längsendes 24 des Stators 2. Da die Stärke des Magnetfelds in diesem inhomogenen Bereich, in dem sich der Längsabschnitt 70 befindet, vom ersten Längsende 24 in Richtung der Längsachse vom Stator weg (betragsmässig) abfällt, greift eine abstossende Nettokraftkomponente 50 (Pfeil in Fig. 1) an diesem Längsabschnitt 70 an. Diese abstossende Nettokraftkomponente 50 stösst den Läufer 1 in Richtung der Längsachse 22 vom Stator 2 weg. Der Längsabschnitt 70 (der Bereich, der durch die beiden gestrichelten Linien axial begrenzt ist) ist zum besseren Verständnis vereinfacht dargestellt. Unabhängig von der jeweiligen Position des Läufers relativ zum Stator 2 ist es aber so, dass in jeder beliebigen Läuferposition über den gesamten Hub immer ein Teil des ersten Teilbereichs 71 innerhalb des permanentmagnetischen Statorbereichs 20 angeordnet ist, während ein anderer Teil des ersten Teilbereichs 71 immer ausserhalb des permanentmagnetischen Statorbereichs 20 angeordnet ist, sodass immer nur lediglich ein Teil des ersten Teilbereichs 71 mit dem permanentmagnetischen Statorbereich 20 überlappt. Dies bedeutet, dass es in jeder beliebigen Läuferposition über den gesamten Hub immer einen Längsabschnitt 70 gleicher Länge gibt, auf den die abstossende Nettokraftkomponente 50 wirkt, wodurch diese abstossende Nettokraftkomponente konstant ist.

Ausserdem umfasst der Konstantkraftgeber eine Sicherungsvorrichtung 4, die eine Rotation des Läufers 1 relativ zum Stator 2 um dessen Längsachse 22 verhindert. Ohne eine solche Sicherungsvorrichtung würde sich bei einem tubularen Konstantkraftgeber der Läufer 1 des Konstantkraftgebers relativ zum Stator 2 selbsttätig drehen, bis die Magnetisierungsrichtung 30 des ersten Teilbereichs 71 des permanentmagnetischen Läuferbereichs 7 gleich wäre wie die Magnetisierungsrichtung 31 des permanentmagnetischen Statorbereichs 20. Die Sicherungsvorrichtung 4 ist hier schematisch in Form einer Linearführung 40 angedeutet (z.B. mit einer Nut), die rotationsfest mit dem Stator 2 verbunden sein kann und in der ein Sicherungsstift 41 in Richtung der Längsachse 22 geführt ist. Andere Sicherungsvorrichtungen sind ebenfalls denkbar.

**Fig. 2** zeigt einen Querschnitt durch die in Figur 1 gezeigte Ausführungsvariante des erfindungsgemässen Konstantkraftgebers entlang der in Fig.1 mit II bezeichneten Linie (Darstellung links in Fig. 2). Wie dort ersichtlich ist, handelt es sich um einen tubularen Konstantkraftgeber, d. h. einen Konstantkraftgeber, der im Querschnitt ein kreiszylindrisches Hohlprofil (Innenprofil) des Stators 2 aufweist sowie ein entsprechendes kreiszylindrisches Profil des Läufers 1 (Aussenprofil) mit einer Aussenwand 12 des Läuferrohrs 11. Der permanentmagnetische Statorbereich 20 umfasst zwei kreiszylinderförmige Segmente, die diametral zur Längsachse 22 um die Innenwand 23 herum angeordnet sind. Der erste Teilbereich 71 des permanentmagnetischen Läuferbereichs 7 ist vollständig kreiszylinderförmig ausgebildet und in der Magnetisierungsrichtung 30 senkrecht zur Längsachse 22 magnetisiert. Das nichtmagnetische Läuferrohr 11 umschliesst den ersten Teilbereich 71. Die in den Figuren 1 und 2 dargestellte Ausführungsvariante ist somit ein 'zweipoliger' Konstantkraftgeber, d.h. der erste Teilbereich 71 des permanentmagnetischen Läuferbereichs 7 und der permanentmagnetisch Statorbereich 20 weisen jeweils nur eine Magnetisierungsrichtung 30, 31 auf. Entsprechend weist der erste Teilbereich 71 und der permanentmagnetische Statorbereich 20 jeweils zwei Pole auf, einen Nordpol und einen Südpol, die in den Zeichnungen entsprechend mit "N" und "S" bezeichnet sind.

Ebenfalls ist in Fig. 2 (Darstellung rechts in Fig. 2) ersichtlich, wie es auf konstruktiv einfache Weise möglich ist, die abstossende Nettokraftkomponente zu reduzieren. Um dies zu erreichen, schliesst die Richtung 30 der Magnetisierung des ersten Teilbereichs 71 des permanentmagnetischen Läuferbereichs 7 mit der Magnetisierungsrichtung 31 des permanentmagnetischen Statorbereichs 20 einen stumpfen Winkel α ein. Es trägt nur derjenige Anteil der Magnetisierung des Läufers zu der Erzeugung der abstossenden Nettokraftkomponente bei, der genau entgegengesetzt zu der Magnetisierungsrichtung des permanentmagnetischen Statorbereichs 20 ist. Weil dieser Anteil mit zunehmender Abweichung des Winkels α von 180° sinkt, wird auch die abstossende Nettokraftkomponente reduziert. Dies ändert allerdings nichts daran, dass die erzeugte abstossende Nettokraftkomponente konstant ist, sie ist nur etwas geringer. Es versteht sich unmittelbar, dass dazu der Läufer 1 so geführt werden muss, dass diese Winkelstellung gewährleistet ist, was aber beispielsweise mit einer (azimutal relativ zur Längsachse 22) winkelverstellbaren Sicherungsvorrichtung 4 (hier schematisch in Form der Linearführung 40 und dem Sicherungsstift 41) möglich ist.

**Fig. 3** zeigt einen Querschnitt einer zweiten Ausführungsvariante des erfindungsgemässen Konstantkraftgebers. Die zweite Ausführungsvariante ist abgesehen von den jeweiligen permanentmagnetischen Bereichen bzw. deren Teilbereichen baugleich mit der ersten Ausführungsvariante und der Querschnitt in Fig. 3 ist daher ähnlich wie der in Fig. 2. Der Läufer 101 umfasst den permanentmagnetischen Läuferbereich 107, der einen ersten Teilbereich 171 aufweist, der hier allerdings derart magnetisiert ist, dass er zwei Nordpole und zwei Südpole aufweist, insgesamt also vier Pole ('vierpolige' Ausführungsvariante). Die in Fig. 3 als Pfeile eingezeichneten Magnetisierungsrichtungen 130a, 130b, 130c, 130d entsprechen den lokalen Magnetisierungsrichtungen an der Aussenseite des ersten Teilbereichs 171. Der Stator 102 umfasst einen permanentmagnetischen Statorbereich, der sich aus vier permanentmagnetischen Statorbereichen 120a, 120b, 120c, 120d zusammensetzt, wobei jeder der Statorbereiche 120a, 120b, 120c, 120d jeweils eine andere Magnetisierungsrichtung 131a, 131b, 131c, 131d senkrecht zur Längsachse aufweist. Jede der Magnetisierungsrichtung 131a, 131b, 131c, 131d ist dabei der lokalen Magnetisierungsrichtung 130a, 130b, 130c, 130d des jeweils gegenüberliegend angeordneten Teils des ersten Teilbereichs 171 entgegengesetzt. Dadurch wird die gesamte abstossende magnetische Kraft, die zwischen dem ersten Teilbereich 171 des Läufers 101 und dem permanentmagnetischen Statorbereich wirkt (und somit insbesondere auch die auf den im inhomogenen Magnetfeld angeordneten Längsabschnitt des Teilebereichs 171 des Läufers 101 wirkende abstossende Nettokraftkomponente) im Vergleich zu der ansonsten baugleichen zweipoligen Ausführungsvariante erhöht.

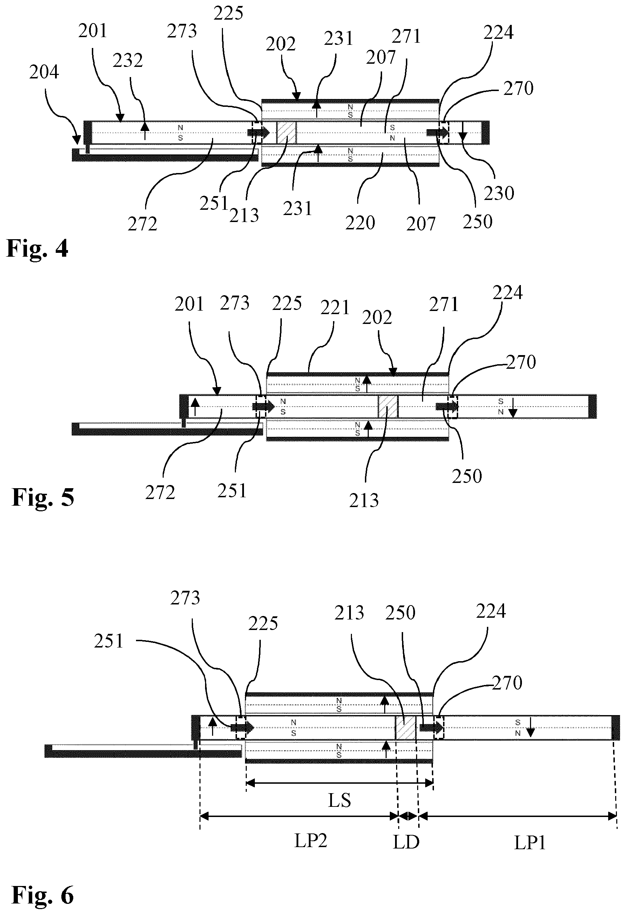

Fig. 4 - Fig. 6 zeigt einen Längsschnitt einer dritten Ausführungsvariante des erfindungsgemässen Konstantkraftgebers, und zwar in **Fig. 4** in einer ersten relativen Anordnung von Läufer und Stator. Diese dritte Ausführungsvariante umfasst den Stator 202, der baugleich ist mit dem Stator 2 der ersten Ausführungsvariante (die entsprechenden Bezugsziffern sind jeweils um zweihundert erhöht), und der ein Rückschlussrohr 221 aufweist. Der Läufer 201 mit den gleichen Querschnittsabmessungen wie der Läufer 1 und der entsprechend in Richtung der Längsachse relativ zum Stator 202 bewegbar angeordnet ist, umfasst einen permanentmagnetischen Läuferbereich 207, der neben einem ersten Teilbereich 271 - der dem ersten Teilbereich der ersten Ausführungsvariante entspricht - einen zweiten Teilbereich 272 aufweist. Der erste Teilbereich 271 und der zweite Teilbereich 272 sind durch einen magnetisch nichtleitenden Läuferbereich 213 (z.B. eine Distanzscheibe aus einem magnetisch nichtleitenden Material) voneinander beabstandet (getrennt). Wie bereits weiter oben beschrieben, ist diese räumliche Trennung des ersten Teilbereichs 271 und des zweiten Teilbereichs 272 nicht zwingend erforderlich, sie kann aber fertigungstechnische und wirtschaftliche Vorteile haben. Die Abmessungen des zweiten Teilbereichs 272 entsprechen denen des ersten Teilbereichs 271. Der zweite Teilbereich 272 kann entweder permanentmagnetisch ausgebildet sein, er kann aber auch aus einem magnetisch leitenden Material (z.B. einem ferromagnetischen Material) bestehen, das keine Magnetisierung aufweist. In der beschriebenen Ausführungsvariante ist der zweite Teilbereich permanentmagnetisch ausgebildet. Allerdings ist die Magnetisierungsrichtung 232 des zweiten Teilbereichs 272 der Magnetisierungsrichtung 230 des ersten Teilbereichs 271 entgegengesetzt und weist somit in die gleiche Richtung wie die Magnetisierungsrichtung 231 des permanentmagnetischen Statorbereichs 220. In der in Fig. 4 gezeigten Anordnung wirkt wie in der ersten Ausführungsvariante am ersten Längsende 224 des Stators 202 eine abstossende (konstante) Nettokraftkomponente 250 auf den Läufer 201, die am aus dem ersten Längsende 224 herausragenden Längsabschnitt 270 des ersten Teilbereichs 271 angreift. Zusätzlich zu der abstossenden Nettokraftkomponente 250 wirkt am zweiten Längsende 225, das dem ersten Längsende 224 gegenüberliegt, eine anziehende (konstante) Nettokraftkomponente 251 (das gilt auch, wenn der zweite Teilbereich 272 nicht permanentmagnetisch ausgebildet ist, sondern aus einem magnetisch leitenden Material besteht). Die anziehende Nettokraftkomponente greift an einem Längsabschnitt 273 des zweiten Teilbereichs 272 an, der aus dem permanentmagnetischen Statorbereich 220 am zweiten Längsende 225 herausragt. Diese anziehende Nettokraftkomponente 251 weist in die gleiche Richtung wie die abstossende Nettokraftkomponente 250. Somit wirkt auf den Läufer 201 insgesamt die Summe der beiden Nettokraftkomponenten 250, 251. Eine Sicherungsvorrichtung 204 gegen eine Rotation des Läufers 201 relativ zum Stator 202 ist baugleich zu der Sicherungsvorrichtung 4 der ersten Ausführungsvariante und kann in alternativen Ausführungsvarianten auch am gegenüberliegenden Ende angeordnet sein.

In **Fig. 5** ist eine zweite relative Anordnung von Stator und Läufer der dritten Ausführungsvariante des erfindungsgemässen Konstantkraftgebers gezeigt. Der Läufer 201 wurde im Vergleich zur ersten Anordnung in Richtung der Längsachse (hier: nach rechts) bewegt. Die abstossende Nettokraftkomponente 250 greift am Längsabschnitt 270 des ersten Teilbereichs 271 an und die anziehende Nettokraftkomponente 251 am Längsabschnitt 273 des zweiten Teilbereichs 272. Da die Stärke der jeweiligen Magnetisierung über den ersten Teilbereich 271 bzw. zweiten Teilbereich 272 konstant ist, ist auch die am ersten Längsende 224 des permanentmagnetischen Statorbereichs 220 auf den Läufer 201 wirkende abstossende Nettokraftkomponente 250 und die am zweiten Längsende 225 anziehende Nettokraftkomponente 251 gleich gross wie in der in Fig. 4 gezeigten ersten Anordnung.

**Fig. 6** zeigt eine dritte relative Anordnung von Stator und Läufer der dritten Ausführungsvariante des erfindungsgemässen Konstantkraftgebers. In dieser dritten relativen Anordnung ist der Läufer 201 noch weiter in der Richtung der Längsachse (hier: nach rechts) bewegt worden. Somit greift im Bereich des ersten Längsende 224 des Stators 202 die abstossende Nettokraftkomponente 250 an dem Längsabschnitt 270 des ersten Teilbereich 271 an und die anziehende Nettokraftkomponente 251 am Längsabschnitt 273 des zweiten Teilbereichs 272. Die Länge LD des magnetisch nichtleitenden Läuferbereichs 213 (z.B. Distanzscheibe aus magnetisch nichtleitendem Material) ist wesentlich kürzer als die Länge LS des permanentmagnetischen Statorbereichs 220 (im Sinne eines möglichst grossen Hubs) und kann auch null sein (keine Distanzscheibe, siehe oben). Sie ist auch wesentlich kürzer als die Länge LP1 des ersten Teilbereichs 271 und die Länge LP2 des zweiten Teilbereichs 272, wobei die Längen LP1, LP2, und die Länge LS des permanentmagnetischen Statorbereichs 220 gleich gross sind. Aus Fig. 6 ist ersichtlich, dass der maximal mögliche Hub des Läufers, bei der die Summe der abstossenden Nettokraftkomponente 250 und der anziehende Nettokraftkomponente 251 auf den Läufer ausgeübt wird auf die Länge LS des Stators abzüglich der Länge LD des magnetisch nichtleitenden Läuferbereichs 213 begrenzt ist (sofern die Längen LP1 und LP2 grösser oder gleich der Länge LS sind, wie dargestellt, andernfalls können auch diese Längen den maximal möglichen Hub begrenzen). Weiterhin ist der maximal mögliche Hub, bei der beide Nettokraftkomponenten 250, 251 vollständig auf den Läufer wirken aufgrund von Randeffekten um eine Länge eingeschränkt, die ungefähr dem Durchmesser des Läufers 201 entspricht. Alternative Weiterbildungen dieser Ausführungsvariante können neben der gezeigten zweipoligen Variante auch eine vierpolige Variante umfassen.

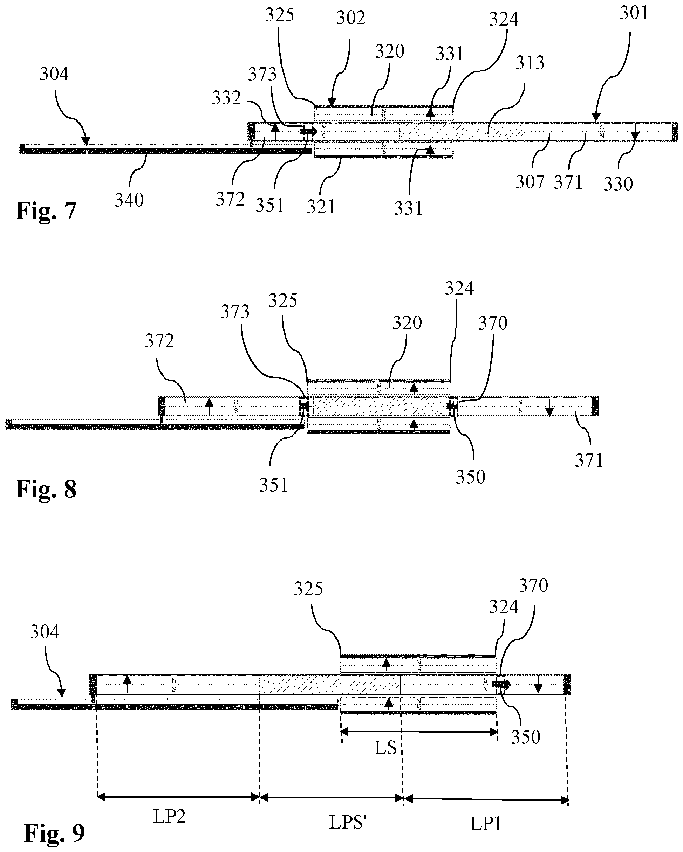

Fig. 7 - Fig. 9 zeigt einen Längsschnitt einer vierten Ausführungsvariante des erfindungsgemässen Konstantkraftgebers, und zwar in **Fig. 7** in einer ersten relativen Anordnung von Läufer und Stator. Diese vierte Ausführungsvariante umfasst den Stator 302 mit dem Rückschlussrohr 321, der baugleich zu dem Stator 202 in der vorangehenden Ausführungsvariante (Fig. 4 - Fig. 6) ist. Der Läufer 301 hat die gleichen Querschnittsabmessungen wie der jeweilige Läufer der vorangegangenen Ausführungsvarianten und umfasst einen permanentmagnetischen Läuferbereich 307. Dieser permanentmagnetische Läuferbereich 307 umfasst einen ersten Teilbereich 371 sowie einen zweiten Teilbereich 372, die ebenfalls baugleich zu den entsprechenden Teilbereichen der in den Figuren 4 bis 6 gezeigten Ausführungsvariante sind und entsprechend zueinander entgegengesetzte Magnetisierungsrichtungen 330, 332 aufweisen (wobei auch hier der zweite Teilbereich 372 von der grundsätzlichen Funktionsweise her aus einem magnetisch leitenden Material ohne Magnetisierung bestehen kann, der aber vorzugsweise permanentmagnetisch ausgebildet ist). Die entsprechenden Bezugsziffern sind ausgehend von der vorhergehenden Ausführungsvariante (Fig. 4 - Fig. 6) jeweils um einhundert erhöht. Der erste Teilbereich 371 und der zweite Teilbereich 372 sind durch einen magnetisch nichtleitenden Läuferbereich 313 (z.B. Distanzstück aus magnetisch nichtleitendem Material) voneinander getrennt und durch dessen Länge LPS' voneinander beabstandet (siehe Fig. 9). Die Länge LPS' des magnetisch nichtleitenden Läuferbereichs 313 ist im Wesentlichen gleich der Länge LS des Stators 302 (bzw. weicht hiervon um ± 1 Läuferdurchmesser davon ab, siehe oben). Dadurch befindet sich lediglich der Längsabschnitt 373 des zweiten Teilbereichs 372 im inhomogenen Magnetfeld nahe eines der beiden Längsenden 324, 325, nämlich nahe des zweiten Längsendes 325. Der erste Teilbereich 371 überlappt in dieser relativen Anordnung von Stator 302 und Läufer 301 überhaupt nicht mit dem permanentmagnetisch Statorbereich 320, und es befindet sich somit kein Längsabschnitt des ersten Teilbereichs 371 in der Nähe des ersten Längsendes 324 des permanentmagnetischen Statorbereichs 320 mit der Magnetisierungsrichtung 331. Es wirkt somit nur die anziehende Nettokraftkomponente 351, die an dem Längsabschnitt 373 des Läufers 301 angreift.

In **Fig. 8** ist eine zweite relative Anordnung von Stator und Läufer der vierten Ausführungsvariante des erfindungsgemässen Konstankraftgebers gezeigt. In dieser Anordnung überlappen sowohl der erste Teilbereich 371 als auch der zweite Teilbereich 372 gerade eben noch mit dem permanentmagnetischen Statorbereich 320. Es befindet sich somit der Längsabschnitt 373 des zweiten Teilbereichs 372 nahe des zweiten Längsendes 325 und der Längsabschnitt 370 des ersten Teilbereichs 371 nahe des ersten Längsendes 324. Entsprechend wirkt eine anziehende Nettokraftkomponente 351 auf den Längsabschnitt 373 des zweiten Teilbereichs 372 und eine abstossende Nettokraftkomponente 350 auf den Längsabschnitt 370 ersten Teilbereichs 371. Entsprechend wirkt auf den Läufer die Summe der beiden Nettokraftkomponenten, die in die gleiche Richtung weisen. Da jedoch die beiden Teilbereiche 371, 372 des permanentmagnetischen Läuferbereichs 307 nur geringfügig mit dem permanentmagnetischen Statorbereich 320 überlappen, sind die beiden Nettokraftkomponenten 350, 351 aufgrund von Randeffekten reduziert. Die Summe der anziehenden Nettokraftkomponente 351 und der abstossende Nettokraftkomponente 350 entspricht im Wesentlichen der anziehenden Nettokraftkomponente 351 der ersten relativen Anordnung von Stator und Läufer.

In **Fig. 9** ist eine dritte relative Anordnung von Stator und Läufer der vierten Ausführungsvariante des erfindungsgemässen Konstantkraftgebers gezeigt. In dieser relativen Anordnung befindet sich lediglich der Längsabschnitt 370 nahe eines der Längsenden 324, 325, nämlich nahe des ersten Längsendes 324. Es wirkt somit nur die abstossende Nettokraftkomponente 350 auf den Läufer 301, die am Längsabschnitt 370 des ersten Teilbereichs 371 angreift. Die abstossende Nettokraftkomponente 350 entspricht von ihrer Stärke her in etwa der anziehenden Nettokraftkomponente 351 in der ersten Anordnung, wobei bei gleichen Stärken der Magnetisierungen der beiden Teilbereiche 371, 372 die abstossende Nettokraftkomponente 350 gegenüber der anziehenden Nettokraftkomponente 351 um ungefähr 30% reduziert ist. Zur Kompensation kann die Stärke der Magnetisierung des zweiten Teilbereichs 372 gegenüber dem ersten Teilbereich 371 um 10% bis 40%, insbesondere um etwa 20%, reduziert, sein. Diese Reduktion kann beispielweise über die Stärke der Magnetisierung erreicht werden (also über verschieden starke Magnete), es kann aber auch über die Ausrichtung der Magnetisierung oder über die Querschnittsgeometrie erreicht werden, sodass nicht grundsätzlich verschieden starke Magnete benötigt werden. Wie schon in der in den Figuren 4 - 6 gezeigten dritten Ausführungsvariante des erfindungsgemässen Konstantkraftgebers sind die Länge LP1 des ersten Teilbereichs 371 und die Länge LP2 des zweiten Teilbereichs 372 etwa gleich gross. Der gesamte Hub des Läufers 301, über den eine konstante Kraft bereitgestellt werden kann, entspricht somit der Summe der Länge LP1 des ersten Teilbereichs 371 oder der Länge LP2 des zweiten Teilbereichs 372, plus der Länge LPS' des magnetisch nichtleitenden Läuferbereichs 313 (bzw. der kürzeren Länge der beiden Teilbereiche 371, 372, falls diese unterschiedlich lang sind). Auch hier ist eine Sicherungsvorrichtung 304 gegen eine Rotation des Läufers 301 relativ zum Stator 302 baugleich zur den entsprechenden Sicherungsvorrichtung 204 der in den Figuren 4 bis 6 gezeigten Ausführungsvariante vorgesehen, wobei die Länge der Linearführung 340 dem verlängerten Hub angepasst ist.

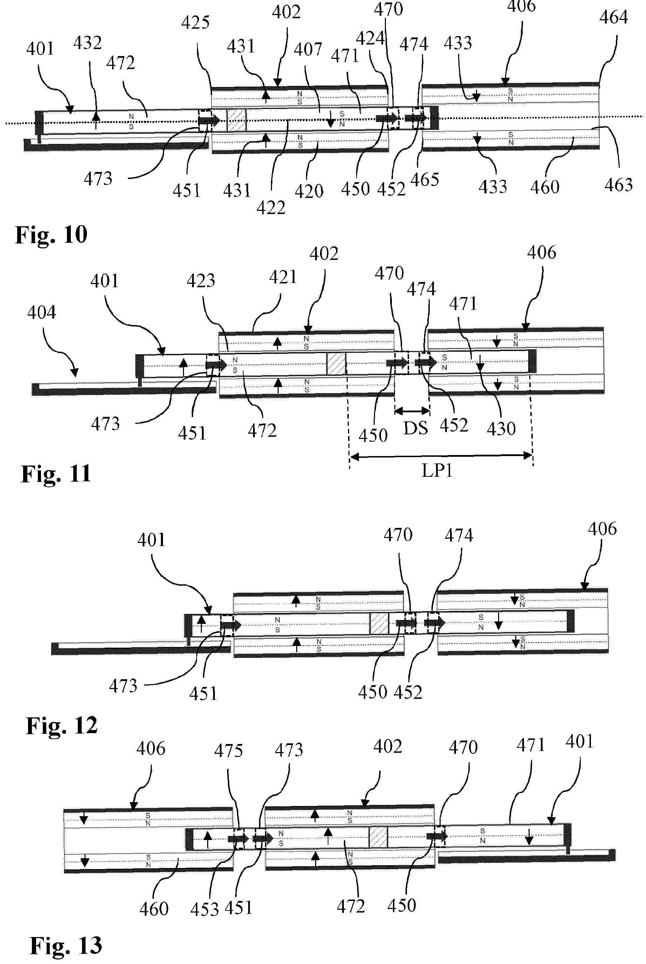

**Fig. 10** - Fig. 13 zeigt eine fünfte Ausführungsvariante des erfindungsgemässen Konstantkraftgebers, und zwar in **Fig. 10** in einer ersten relativen Anordnung von Stator und Läufer. Diese fünfte Ausführungsvariante des erfindungsgemässen Konstantkraftgebers umfasst den Stator 402 und den Läufer 401, wobei der Stator 402 baugleich zum dem Stator 202 ist und ein Rückschlussrohr 421 aufweist, und wobei der Läufer 401 (mit dem permanentmagnetischen Läuferbereich 407) baugleich zum Läufer 201 der in den Figuren 4 bis 6 gezeigten dritten Ausführungsvariante sind. Entsprechende Bezugsziffern erhöhen sich jeweils um zweihundert gegenüber der dritten Ausführungsvariante. Die fünfte Ausführungsvariante umfasst jedoch einen weiteren Stator 406, der einen weiteren Statorbereich 460 aufweist. Dieser weitere Statorbereich 460 ist bei der gezeigten Ausführungsvariante permanentmagnetisch ausgebildet, er kann aber von der grundsätzlichen Funktionsweise her auch aus einem magnetisch leitenden Material bestehen. Die Abmessungen des weiteren Stators 406 einschliesslich des weiteren - hier permanentmagnetischen - Statorbereichs 460 entsprechen denen des Stators 402 bzw. des permanentmagnetischen Statorbereichs 420. Die Magnetisierungsrichtung 433 des weiteren permanentmagnetischen Statorbereichs 460 ist der Magnetisierungsrichtung 431 des permanentmagnetischen Statorbereichs 420 des Stators 402 entgegengesetzt, weist aber die gleiche Magnetisierungsrichtung 430 auf wie der erste Teilbereich 471 des Läufers 401. Der weitere Stator 406 ist relativ zum Stator 402 ortsfest angeordnet. Weiterhin ist der weitere Stator 406 relativ zu der Längsachse 422 des Stators 402 fluchtend ausgerichtet, so dass das Hohlprofil mit der Innenwand 463 des weiteren Stators 406 mit dem Hohlprofil mit der Innenwand 423 des Stators 402 ausgerichtet ist. Ein Abstand DS (Fig. 11), zwischen dem Stator 402 und dem weiteren Stator 406 ist dabei wesentlich geringer als die Länge LP1 des ersten Teilbereichs 471. Die Statoren können auch direkt aneinander angeordnet werden (DS=0). Bei einer Bewegung des Läufers 401 in Richtung der Längsachse zu dem weiteren Stator 406 hin dringt der Läufer 401 folglich in den weiteren Stator 406 ein, wie in Fig. 10 gezeigt ist. In dieser Anordnung greift die anziehende (konstante) Nettokraftkomponente 451 am Längsabschnitt 473 des zweiten Teilbereichs 472 mit der Magnetisierungsrichtung 432 an, der an dem zweiten Längsende 425 des Stators 402 herausragt, und die abstossende (konstante) Nettokraftkomponente 450 greift an dem Längsabschnitt 470 des ersten Teilbereichs 471 an, der aus dem ersten Längsende 424 herausragt. Ferner greift eine weitere, anziehende (konstante) Nettokraftkomponente 452 an einem weiteren Längsabschnitt 474 des ersten Teilbereichs 471 an, der aus einem zweiten Längsende 465 des weiteren Stators 406 gegenüber dem ersten Längende 464 herausragt. Insgesamt wirken auf den Läufer 401 die anziehende (konstante) Nettokraftkomponente 451, die abstossende (konstante) Nettokraftkomponente 450, sowie die weitere anziehende (konstante) Nettokraftkomponente 452, die alle in die gleiche Richtung weisen.

**Fig. 11** und **Fig. 12** zeigen eine zweite und eine dritte relative Anordnung von Stator und Läufer der fünften Ausführungsvariante des erfindungsgemässen Konstantkraftgebers (siehe auch Fig. 10), in der jeweils der Läufer 401 im Vergleich zur ersten relativen Anordnung weiter in Richtung des weiteren Stators 406 hin angeordnet ist. Entsprechend greift in Fig. 11 die anziehende Nettokraftkomponente 451 am Längsabschnitt 473 des zweiten Teilbereichs 472 an, die abstossende Nettokraftkomponente 450 am Längsabschnitt 470 des ersten Teilbereichs 471 und die weitere anziehende Nettokraftkomponente 452 am weiteren Längsabschnitt 474 des ersten Teilbereichs 471. In der in Fig. 12 gezeigten dritten relativen Anordnung ist der Läufer 401 im Vergleich zur in Fig. 12 gezeigten zweiten Anordnung noch weiter in Richtung des weiteren Stators 406 hin angeordnet. Entsprechend greift die abstossende Nettokraftkomponente 450 am Längsabschnitt 470 des ersten Teilbereichs 471 an, die anziehende Nettokraftkomponente 451 greift am Längsabschnitt 473 des zweiten Teilbereichs 472 an und die weitere anziehende Nettokraftkomponente 452 greift am weiteren Längsabschnitt 474 des ersten Teilbereichs 471 an. Entsprechend wirken in allen drei Anordnungen der fünften Ausführungsvariante die abstossende Nettokraftkomponente 450, die anziehende Nettokraftkomponente 451, sowie die weitere anziehende Nettokraftkomponente 452 auf den Läufer, die alle drei jeweils in die gleiche Richtung weisen. Die auf den Läufer wirkende Gesamtkraft in Richtung der Längsachse 422 kann dadurch erhöht werden.

Alternativ dazu lässt sich, wie in **Fig. 13** gezeigt, der weitere Stator 406 auf der zu der in den Figuren 10 bis 12 gezeigten Anordnung gegenüberliegenden Seite des Stators 402 anordnen. In dieser Anordnung wirkt auf den Längsabschnitt 470 des ersten Teilbereichs 471 des Läufers 401 die abstossende Nettokraftkomponente 450, auf den Längsabschnitt 473 des zweiten Teilbereichs 472 die anziehende Nettokraftkomponente 451 und auf den weiteren Längsabschnitt 475 die weitere abstossende Nettokraftkomponente 453. Dabei muss allerdings der Statorbereich 460 des weiteren Stators 406 zwingend permanentmagnetisch ausgebildet sein, da nur so die auf den weiteren Längsabschnitt 475 wirkende abstossende Nettokraftkomponente 453 erzeugt werden kann. Die Sicherungsvorrichtung 404 dient zur Sicherung gegen eine Rotation des Läufers 401 relative zum Stator 402, wie oben bereits beschrieben

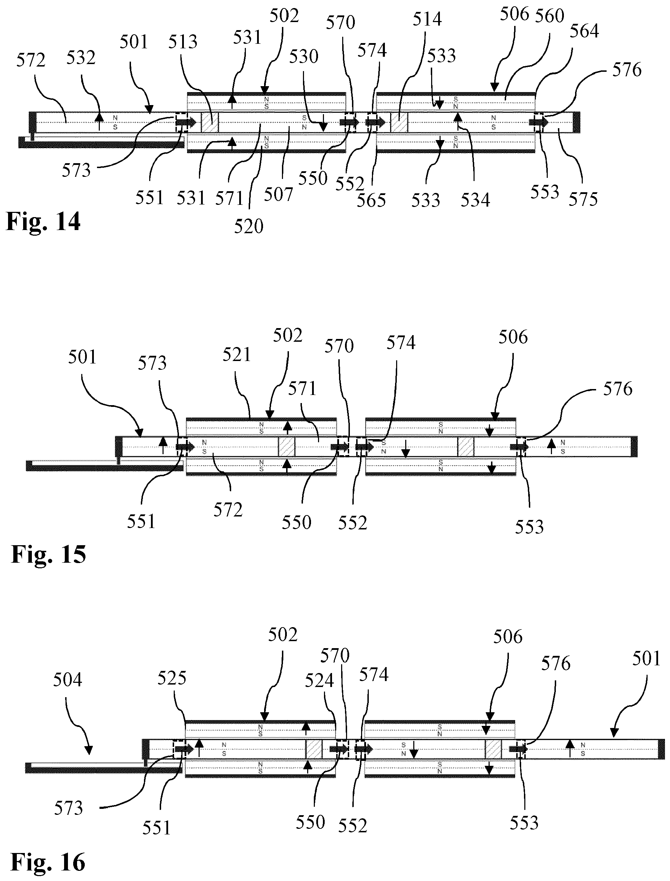

**Fig. 14** - **Fig. 16** zeigt eine sechste Ausführungsvariante des erfindungsgemässen Konstantkraftgebers, und zwar in **Fig. 14** in einer ersten relativen Anordnung von Stator 502 und Läufer 501, wobei der Stator 502 ein Rückschlussrohr 521 sowie einen permanentmagnetischen Statorbereich 520 mit einer Magnetisierungsrichtung 531 aufweist sowie ein erstes Längsende 524 und ein zweites Längsende 525, und wobei der Läufer 501 einen permanentmagnetischen Bereich 507 mit einem ersten Teilbereich 571 mit einer Magnetisierungsrichtung 530 und einem zweiten Teilbereich 572 mit einer Magnetisierungsrichtung 532 aufweist. Diese Ausführungsvariante entspricht der in den Figuren 11 bis 13 gezeigten fünften Ausführungsvariante mit dem Unterschied, dass in dieser sechsten Ausführungsvariante der permanentmagnetische Läuferbereich 507 des Läufers 501 zusätzlich zu dem ersten Teilbereich 571 und dem zweiten Teilbereich 572, die jeweils baugleich wie der entsprechende erste Teilbereich 471 und der zweite Teilbereich 472 des permanentmagnetischen Läuferbereichs 407 der fünften Ausführungsvariante sind, noch einen dritten Teilbereich 575 umfasst. Entsprechende Bezugsziffern erhöhen sich dementsprechend jeweils um einhundert. Der dritte Teilbereich 575 ist durch einen weiteren (idealerweise) magnetisch nichtleitenden Läuferbereich 514 (z.B. Distanzscheibe aus magnetisch nichtleitendem Material) vom ersten Teilbereich 571 getrennt (obwohl aus prinzipiellen funktionstechnischen Gründen dieser Trennung nicht zwingend erforderlich ist, siehe oben), und ist baugleich zu dem magnetisch nichtleitenden Läuferbereich 513, der den zweiten Teilbereich 572 vom ersten Teilbereich 571 trennt. Entsprechend ragt ein Längsabschnitt 576 aus dem ersten Längsende 564 des weiteren permanentmagnetischen Statorbereichs 560 des weiteren Stators 506 heraus (gegenüber von dessen zweiten Längsende 565). Der dritte Teilbereich 575 weist eine Magnetisierungsrichtung 534 auf, die der Magnetisierungsrichtung 533 des weiteren permanentmagnetischen Statorbereichs 560 entgegengesetzt ist. Entsprechend greift eine weitere abstossende Nettokraftkomponente 553 an dem herausragenden Längsabschnitt 576 an, die den Läufer 501 vom weiteren Stator 506 weg abstösst. Es wirken somit die anziehende (konstante) Nettokraftkomponente 551 auf den Längsabschnitt 573 des zweiten Teilbereichs 572, die abstossende (konstante) Nettokraftkomponente 550 auf den Längsabschnitt 570 des ersten Teilbereichs 571, die weitere anziehende (konstante) Nettokraftkomponente 552 auf den Längsabschnitt 574 des ersten Teilbereichs 571, und die weitere abstossende (konstante) Nettokraftkomponente 553 auf den Längsabschnitt 576 des dritten Teilbereichs 575, wobei alle Nettokraftkomponenten in die gleiche Richtung weisen.

**Fig. 15** zeigt eine zweite relative Anordnung von Stator und Läufer der sechsten Ausführungsvariante des erfindungsgemässen Konstantkraftgebers, bei der der Läufer 501 weiter relativ zum Stator 502 und zum weiteren Stator 506 in Richtung der Längsachse bewegt worden ist, und **Fig. 16** eine dritte relative Anordnung von Läufer und Stator, bei der der Läufer 501 noch weiter in diese Richtung bewegt wurde. In der in Fig. 15 dargestellten Anordnung greift die anziehende (konstante) Nettokraftkomponente 551 an dem Längsabschnitt 573 des zweiten Teilbereichs 572, die abstossende (konstante) Nettokraftkomponente 550 am Längsabschnitt 570 des ersten Teilbereichs 571, die weitere anziehende (konstante) Nettokraftkomponente 552 am weiteren Längsabschnitt 574 des ersten Teilbereichs 571 und die weitere abstossende (konstante) Nettokraftkomponente 553 am Längsabschnitt 576 des dritten Teilbereichs 575 an. In der in Fig. 16 dargestellten Anordnung greift entsprechend die anziehende (konstante) Nettokraftkomponente 551 an dem Längsabschnitt 573 des zweiten Teilbereichs 572, die abstossende (konstante) Nettokraftkomponente 550 am Längsabschnitt 570 des ersten Teilbereichs 571, die weitere anziehende (konstante) Nettokraftkomponente 552 am weiteren Längsabschnitt 574 des ersten Teilbereichs 571 und die weitere abstossende (konstante) Nettokraftkomponente 553 am Längsabschnitt 576 des dritten Teilbereichs 575 an. Die anziehende Nettokraftkomponente 551, die abstossende Nettokraftkomponente 550, die weitere anziehende Nettokraftkomponente 552 sowie die weitere abstossende Nettokraftkomponente 553 wirken somit in allen drei in den Figuren 14 bis 16 gezeigten relativen Anordnungen alle auf den Läufer 501 und weisen alle in die gleiche Richtung. Die Sicherungsvorrichtung 504 dient zur Sicherung gegen eine Rotation des Läufers 501 relativ zum Stator 502, wie oben bereits beschrieben.

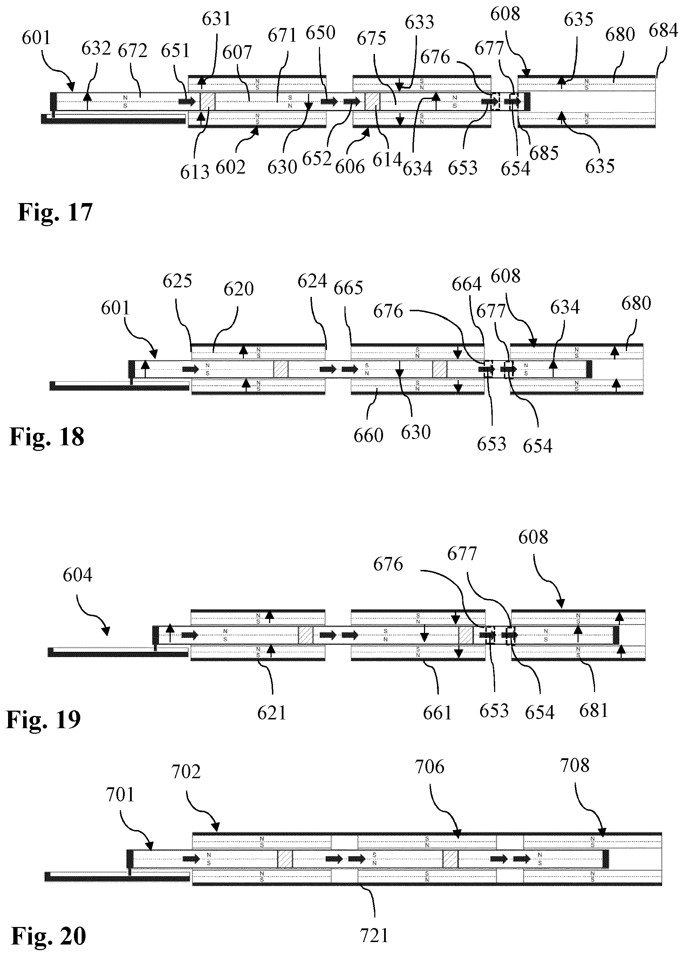

**Fig. 17, Fig. 18** und **Fig. 19** zeigen jeweils eine siebte Ausführungsvariante des erfindungsgemässen Konstantkraftgebers. Diese Ausführungsvariante umfasst den Stator 602, der einen permanentmagnetischen Statorbereich 620 mit einer Magnetisierungsrichtung 631 und einem Rückschlussrohr 621 aufweist sowie ein erstes Längsende 624 und ein zweites Längsende 625. Sie umfasst ferner den Läufer 601 mit dem permanentmagnetischen Läuferbereich 607 mit dem ersten Teilbereich 671 mit einer Magnetisierungsrichtung 630, dem zweiten Teilbereich 672 mit der Magnetisierungsrichtung 632, sowie dem dritten Teilbereich 675 mit der Magnetisierungsrichtung 634. Der erste Teilbereich 671 ist durch den (idealerweise) magnetisch nichtleitenden Bereich 613 (z.B. Distanzscheibe) getrennt von dem zweiten Teilbereich 672, und durch den (idealerweise) magnetisch nichtleitenden Bereich 614 (z.B. Distanzscheibe) vom dritten Teilbereich 675. Weiterhin umfasst sie den weiteren Stator 606 mit dem permanentmagnetischen Statorbereich 660 und dessen Magnetisierungsrichtung 633 sowie mit dessen ersten Längsende 664 und zweiten Längsende 665. Diese Komponenten sind baugleich mit dem Läufer 501, dem Stator 502 und dem weiteren Stator 506 aus der sechsten Ausführungsvariante. In der siebten Ausführungsvariante umfasst der Konstantkraftgeber aber noch einen zusätzlichen Stator 608 mit einem ersten Längsende 684 und einem zweiten Längsende 685, der die gleichen Abmessungen aufweist wie der Stator 602 und der weitere Stator 606, und der einen permanentmagnetischen Statorbereich 680 aufweist mit einer Magnetisierungsrichtung 635. Der zusätzliche Stator 608 ist relativ zum weiteren Stator 606 derart angeordnet wie der weitere Stator 606 relativ zum Stator 602. Entsprechend wirkt auf den Längsabschnitt 677 des dritten Teilbereichs 675 des permanentmagnetischen Läuferbereichs 607, der aus einem zweiten Längsende 685 des zusätzlichen Stators 608 herausragt, eine zusätzliche anziehende (konstante) Nettokraftkomponente 654. Somit wirkt auf den dritten Teilbereich 675 sowohl die weitere abstossende (konstante) Nettokraftkomponente 653, die am Längsabschnitt 676 angreift als auch die zusätzliche anziehende (konstante) Nettokraftkomponente 654, die am Längsabschnitt 677 angreift. Weiterhin wirken auch noch die in der vorangehenden Ausführungsvariante genannten wirkenden Kräfte, nämlich die weitere anziehende (konstante) Nettokraftkomponente 652 auf den ersten Teilbereich 671, sowie die abstossende (konstante) Nettokraftkomponente 650 auf den ersten Teilbereich 671 und die anziehende (konstante) Nettokraftkomponente 651 auf den zweiten Teilbereich 672, wenn der Läufer in die in der jeweiligen Figur gezeigten Anordnung in Richtung der Längsachse bewegt wird. In dieser Ausführungsvariante ist jeder der Statoren 602, 606 und 608 von einem eigenen, separaten Rückschlussrohr 621, 661, 681 umgeben. Die Sicherungsvorrichtung 604 dient zur Sicherung gegen eine Rotation des Läufers 601 relativ zum Stator 602, wie oben bereits beschrieben.

**Fig. 20** zeigt eine Weiterbildung der siebten Ausführungsvariante des erfindungsgemässen Konstantkraftgebers, wobei die Statoren 702, 706 und 708 von einem gemeinsamen, durchgehenden Rückschlussrohr 721 umgeben sind. Entsprechend können in alternativen Ausführungsvarianten auch die in den in den Figuren 10 bis 16 gezeigten Ausführungsvarianten des erfindungsgemässen Konstantkraftgebers ein gemeinsames, durchgehendes Rückschlussrohr aufweisen.

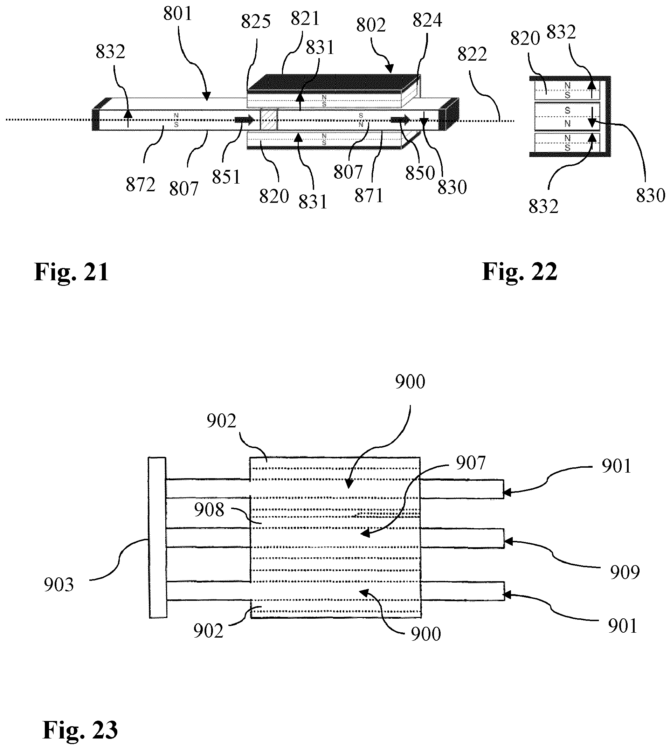

**Fig. 21** und **Fig. 22** zeigen eine achte Ausführungsvariante des erfindungsgemässen Konstantkraftgebers (einseitig offen). In Fig. 21 ist eine perspektivische Ansicht gezeigt und in Fig. 22 ein Querschnitt. Der Läufer 801 und der Stator 802 weist dabei jeweils ein rechteckiges Profil auf. Die hier gezeigte Ausführungsvariante entspricht der in den Figuren 4 bis 6 dargestellten Ausführungsvariante mit dem Unterschied, dass das Querschnittsprofil rechteckig ist (anstatt tubular) und einseitig offen. Dazu muss natürlich sichergestellt sein, dass der Läufer 801 geführt ist und nicht auf der offenen Seite (in Fig. 21 aus der Bildebene heraus, in Fig. 22 nach links) entweichen kann.

Das heisst, dass der Stator 802 als auch dessen permanentmagnetischer Statorbereich 820 (U-Form mit rechtwinklig angeordneten Schenkeln) ausgebildet sind. Der permanentmagnetische Statorbereich 820 weist eine Magnetisierungsrichtung 831 auf sowie ein erstes Längsende 824 und ein zweites Längsende 825 sowie ein einseitig offenes Rückschlussrohr 821.

Weiterhin sind der Läufer 801 und dessen permanentmagnetischer Läuferbereich 807, einschliesslich des ersten Teilbereichs 871 und des zweiten Teilbereichs 872, rechteckig ausgebildet und in Richtung der Längsachse 822 bewegbar. Die Magnetisierungsrichtung 832 des zweiten Teilbereichs 872, die Magnetisierungsrichtung 830 des ersten Teilbereichs 871 sowie die Magnetisierungsrichtung 831 des permanentmagnetisch Statorbereichs 820 entsprechen denen des in den Fig. 4-6 gezeigten dritten Ausführungsbeispiels. Die Funktionsweise ist daher gleich wie bei diesem dritten Ausführungsbeispiel und braucht daher nicht erneut beschrieben zu werden, es wirken die abstossende (konstante) Nettokraftkoponente 850 und die anziehende (konstante) Nettokraftkomponente 851. Allerdings wird aufgrund des rechteckigen Profils keine Verdrehsicherung benötigt, wohl aber eine Führung, damit der Läufer nicht entweichen kann.

Entsprechend können alle in den vorangegangenen Figuren dargestellte Ausführungsformen entweder als tubulare Konstantkraftgeber oder als Konstantkraftgeber mit einem rechteckigen Profil ausgebildet sein. Ausserdem können alle in den vorangegangen Figuren dargestellten Ausführungsvarianten als zweipolige oder vierpolige Konstantkraftgeber ausgebildet sein.

**Fig. 23** zeigt eine Ausführungsvariante eines erfindungsgemässen Linearantriebsystems. Das Linearantriebssystem umfasst einen Linearmotor 907 (z.B. einen tubularen Linearmotor) mit einem Motorstator 908 sowie einem Motorläufer 909. Weiterhin umfasst das erfindungsgemässe Linearantriebssystem zwei erfindungsgemässe Konstantkraftgeber 900. Die Statoren 902 der beiden Konstantkrafgeber 900 und der Motorstator 908 sind in einem gemeinsamen Gehäuse 903 untergebracht. Der Motorläufer 909 und die Läufer 901 der beiden Konstankraftgeber 900 sind durch eine Verbindungsvorrichtung 903 - hier in Form einer Platte - axial fest miteinander verbunden, während die Verbindung mit der Platte in einer Richtung senkrecht zur axialen Richtung (Richtung der Längsachse) nicht vollständig fest zu sein braucht. Bei diesem Ausführungsbeispiel muss der Läufer 901 des jeweiligen Konstantkrafgebers 900 nicht gegen eine Rotation relativ zum Stator gesichert sein.

Der erfindungsgemässe Konstantkraftgeber sowie das erfindungsgemässe Linearantriebssystem sind vorstehen anhand von Ausführungsvarianten erläutert worden. Die Erfindung ist jedoch nicht auf diese Ausführungsvarianten beschränkt, sondern soll auch solche Ausführungsvarianten umfassen, die von der technischen Lehre der Erfindung Gebrauch machen. Beispielsweise kann dort, wo eine anziehende Nettokraftkomponente erzeugt werden muss, anstelle eines permanentmagnetischen Bereichs auch ein magnetisch leitender Bereich vorgesehen sein, sofern nicht andere technische Gründe dem entgegenstehen. Der Schutzbereich wird daher durch die nachfolgenden Patentansprüche bestimmt.

## Patentansprüche

1. Konstantkraftgeber, insbesondere tubularer Konstantkraftgeber, umfassend
- einen Stator (2; 102; 202; 302; 402; 502; 602; 702; 802), der eine Längsachse (22; 422; 822) sowie einen permanentmagnetischen Statorbereich (20; 120a, 120b, 120c, 120d; 220; 320; 420; 520; 620; 820) aufweist, wobei der permanentmagnetische Statorbereich ein erstes Längsende (24; 224; 324; 424; 524; 624; 824) aufweist sowie ein zweites Längsende (25; 225; 325; 425; 525; 625; 825), das dem ersten Längsende (24; 224; 324; 424; 524; 624; 824) axial gegenüberliegt, und
- einen in Richtung der Längsachse über einen Hub relativ zum Stator bewegbar angeordneten Läufer (1; 101; 201; 301; 401; 501; 601; 701; 801), der einen permanentmagnetischen Läuferbereich (7; 107; 207; 307; 407; 507; 607; 807) aufweist, wobei der permanentmagnetische Statorbereich und zumindest teilweise auch der permanentmagnetische Läuferbereich jeweils in einer Magnetisierungsrichtung magnetisiert ist, die senkrecht zur Richtung der Längsachse ist, und wobei der permanentmagnetische Statorbereich und der permanentmagnetische Läuferbereich über den gesamten Hub des Läufers in der Richtung der Längsachse lediglich teilweise überlappend angeordnet sind, so dass eine zwischen dem permanentmagnetischen Statorbereich und dem permanentmagnetischen Läuferbereich wirkende magnetische Kraft eine über den gesamten Hub konstante Nettokraftkomponente in der Richtung der Längsachse aufweist, und
wobei der permanentmagnetische Läuferbereich einen ersten Teilbereich (71; 171; 271; 371; 471; 571; 671; 871) aufweist, der eine Magnetisierung aufweist, die eine Nettomagnetisierungskomponente in einer Richtung (30; 130a, 130b, 130c,130d; 230; 330; 430; 530; 630; 830) entgegengesetzt zu der Magnetisierungsrichtung (31, 131a, 131b, 131c, 131d; 231; 331; 431; 531; 631; 831) des permanentmagnetischen Statorbereichs aufweist,
so dass im Fall einer lediglich teilweise überlappenden Anordnung des ersten Teilbereichs und des permanentmagnetischen Statorbereichs derart, dass ein Längsabschnitt (70; 270; 370; 470; 570) des ersten Teilbereichs in der Richtung der Längsachse ausschliesslich am ersten Längsende (24; 224; 324; 424; 524; 624; 824) des permanentmagnetischen Statorbereichs aus dem permanentmagnetischen Statorbereich herausragt, die über den gesamten Hub konstante Nettokraftkomponente eine abstossende konstante Nettokraftkomponente (50; 250; 350; 450; 550; 650; 850) umfasst, die den Läufer in der Richtung der Längsachse vom ersten Längsende des Stators weg abstösst.

2. Konstantkraftgeber nach Anspruch 1, wobei die Richtung (30) der Magnetisierung des ersten Teilbereichs (71) des permanentmagnetischen Läuferbereichs (7) entgegengesetzt zu der Magnetisierungsrichtung (31) des permanentmagnetischen Statorbereichs (20) ist.

3. Konstantkraftgeber nach Anspruch 1, wobei die Richtung der Magnetisierung (30) des ersten Teilbereichs (71) des permanentmagnetischen Läuferbereichs (7) und die Magnetisierungsrichtung (31) des permanentmagnetischen Statorbereichs (20) einen stumpfen Winkel (α) einschliessen.

4. Konstantkraftgeber nach einem der vorangehenden Ansprüche, wobei die Stärke der Magnetisierung des permanentmagnetischen Statorbereichs (20; 120a, 120b, 120c, 120d; 220; 320; 420; 520; 620; 820) in der Richtung der Längsachse (22; 422; 822) betrachtet über die Länge (LS) des permanentmagnetischen Statorbereichs konstant ist, um ein Magnetfeld zu erzeugen, das in der Richtung der Längsachse betrachtet über die Länge des permanentmagnetischen Statorbereichs homogen ist und vom ersten Längsende sowie vom zweiten Längsende des permanentmagnetischen Statorbereichs weg entlang der Längsachse betrachtet abfällt, und wobei die Stärke der Magnetisierung des ersten Teilbereichs (71; 171; 271; 371; 471; 571; 671; 871) des permanentmagnetischen Läuferbereichs (7; 107; 207; 307; 407; 507; 607; 807) in der Richtung der Längsachse betrachtet über die Länge (LP1) des ersten Teilbereichs des permanentmagnetischen Läuferbereichs konstant ist.

5. Konstantkraftgeber nach einem der vorangehenden Ansprüche, wobei der permanentmagnetischen Läuferbereich einen zweiten Teilbereich (272; 372; 472; 572; 672; 872) aufweist, der entweder permanentmagnetisch ausgebildet ist und eine Magnetisierung aufweist, die eine Nettomagnetisierungskomponente in einer Richtung identisch mit der Magnetisierungsrichtung des permanentmagnetischen Statorbereichs aufweist, oder der aus einem magnetisch leitenden Material besteht,
so dass im Fall einer lediglich teilweise überlappenden Anordnung des zweiten Teilbereichs (272; 372; 472; 572; 672; 872) und des permanentmagnetischen Statorbereichs (220; 320; 420; 520; 620; 820) derart, dass ein Längsabschnitt (273; 373; 473; 573) des zweiten Teilbereichs in der Richtung der Längsachse ausschliesslich am zweiten Längsende (225; 325; 425; 525; 625; 825) des permanentmagnetischen Statorbereichs aus dem permanentmagnetischen Statorbereich herausragt, die über den gesamten Hub konstante Nettokraftkomponente eine anziehende konstante Nettokraftkomponente (251; 351; 451; 551; 651; 851) umfasst, die den Läufer in der Richtung der Längsachse zum zweiten Längsende des Stators hin anzieht, wobei die anziehende (251; 351; 451; 551; 651; 851) und die abstossende konstante Nettokraftkomponente (250; 350; 450; 550; 650; 850) in die gleiche Richtung weisen,
wobei im Fall der lediglich teilweise überlappenden Anordnung des ersten Teilbereichs (271; 371; 471; 571; 671; 871) und des permanentmagnetischen Statorbereichs (220; 320; 420; 520; 620; 820) derart, dass ein Längsabschnitt des ersten Teilbereichs in der Richtung der Längsachse ausschliesslich am ersten Längsende (224; 324; 424; 524; 624; 824) des permanentmagnetischen Statorbereichs aus dem permanentmagnetischen Statorbereich herausragt, die abstossende konstante Nettokraftkomponente (250; 350; 450; 550; 650; 850) an dem herausragenden Längsabschnitt des ersten Teilbereichs angreift,
und wobei im Fall der lediglich teilweise überlappenden Anordnung des zweiten Teilbereichs (272; 372; 472; 572; 672; 872) und des permanentmagnetischen Statorbereichs (220; 320; 420; 520; 620; 820) derart, dass ein Längsabschnitt des zweiten Teilbereichs in der Richtung der Längsachse ausschliesslich am zweiten Längsende des permanentmagnetischen Statorbereichs aus dem permanentmagnetischen Statorbereich herausragt (225; 325; 425; 525; 625; 825), die anziehende konstante Nettokraftkomponente (251; 351; 451; 551; 651; 851) am herausragenden Längsabschnitt des zweiten Teilbereichs (272; 372; 472; 572; 672; 872) angreift.

6. Konstantkraftgeber nach Anspruch 5, wobei im Fall, dass der zweite Teilbereich (272; 372; 472; 572; 672; 872) des permanentmagnetischen Läuferbereichs (207; 307; 407; 507; 607; 807) permanentmagnetisch ausgebildet ist, die Stärke der Magnetisierung des zweiten Teilbereichs bezüglich der Richtung der Längsachse (22; 422; 822) über dessen Länge (LP2) konstant ist,
und im Fall, dass der zweite Teilbereich des permanentmagnetischen Läuferbereichs magnetisch leitend ausgebildet ist, die magnetische Leitfähigkeit des zweiten Teilbereichs über dessen Länge in der Richtung der Längsachse betrachtet konstant ist.

7. Konstantkraftgeber nach Anspruch 5 oder Anspruch 6, wobei der erste Teilbereich (271) und der zweite Teilbereich (272) des permanentmagnetischen Läuferbereichs in Richtung der Längsachse in einem Abstand (LD) voneinander angeordnet sind, der kleiner ist als 90% der Länge des permanentmagnetischen Statorbereichs (220).

8. Konstantkraftgeber nach Anspruch 5 oder Anspruch 6, wobei der erste Teilbereich (371) und der zweite Teilbereich (372) des permanentmagnetischen Läuferbereichs in Richtung der Längsachse in einem Abstand (LPS') voneinander angeordnet sind, der im Wesentlichen gleich ist wie die Länge des permanentmagnetischen Statorbereichs.

9. Konstantkraftgeber nach einem der vorangehenden Ansprüche, wobei der Konstantkraftgeber einen weiteren Stator (406; 506; 606) umfasst, der einen weiteren Statorbereich (460; 560; 660) aufweist, der entweder permanentmagnetisch ausgebildet ist und eine Magnetisierung aufweist, die eine Nettomagnetisierungskomponente in Richtung der Magnetisierung des ersten Teilbereichs (471; 571; 671) des permanentmagnetischen Läuferbereichs aufweist, oder der aus einem magnetisch leitenden Material besteht,
wobei der weitere Statorbereich ein weiteres erstes Längsende (464) aufweist sowie ein weiteres zweites Längsende (465), das dem weiteren ersten Längsende axial gegenüberliegt, und wobei das weitere zweite Längsende des weiteren Statorbereichs dem ersten Längsende des permanentmagnetischen Statorbereichs zugewandt ist,
wobei der erste Teilbereich (471; 571; 671) des permanentmagnetischen Läuferbereichs und der weitere Statorbereich (460; 560; 660) in der Richtung der Längsachse derart lediglich teilweise überlappend angeordnet sind,
dass ein weiterer Längsabschnitt (474; 574) des ersten Teilbereichs in der Richtung der Längsachse ausschliesslich am weiteren zweiten Längsende (465; 565; 665) des weiteren permanentmagnetischen Statorbereichs aus dem weiteren permanentmagnetischen Statorbereich herausragt,
so dass eine zwischen dem ersten Teilbereich (471; 571; 671) und dem weiteren Statorbereich (460; 560; 660) wirkende magnetische Kraft eine weitere konstante Nettokraftkomponente (452; 552; 652) in der Richtung der Längsachse aufweist, die den Läufer in Richtung der Längsachse zum weiteren Stator (406; 506; 606) hin anzieht, wobei die weitere konstante Nettokraftkomponente (452; 552; 652) in die gleiche Richtung weist wie die abstossende konstante Nettokraftkomponente (450; 550; 650).

10. Konstantkraftgeber nach Anspruch 9, wobei
im Fall, dass der weitere Statorbereich (460; 560; 660) permanentmagnetisch ausgebildet ist, die Stärke der Magnetisierung des permanentmagnetischen weiteren Statorbereichs über dessen Länge in der Richtung der Längsachse betrachtet konstant ist, um ein Magnetfeld zu erzeugen, das in der Richtung der Längsachse betrachtet über die Länge des weiteren permanentmagnetischen Statorbereichs homogen ist und vom weiteren ersten Längsende sowie vom weiteren zweiten Längsende (465; 565; 665) des weiteren permanentmagnetischen Statorbereichs weg entlang der Längsachse betrachtet abfällt,
und im Fall, dass der weitere Statorbereich magnetisch leitend ausgebildet ist, die magnetische Leitfähigkeit des magnetisch leitenden weiteren Statorbereichs über dessen Länge in der Richtung der Längsachse betrachtet konstant ist.

11. Konstantkraftgeber nach einem der vorangehenden Ansprüche , wobei der insbesondere tubulare Konstantkraftgeber eine Sicherungsvorrichtung (4; 104: 204; 304; 404; 504; 604) gegen eine Rotation des Läufers relativ zum Stator um die Längsachse umfasst.

12. Konstantkraftgeber nach einem der Ansprüche 5 bis 11, wobei der erste Teilbereich (371) und der zweite Teilbereich (372) des permanentmagnetischen Läuferbereichs beide permanentmagnetisch ausgebildet sind, und wobei die Stärke der Magnetisierung des zweiten Teilbereichs (372) des permanentmagnetischen Läuferbereichs relativ zur Stärke der Magnetisierung des ersten Teilbereichs (371) des permanentmagnetischen Läuferbereichs um 10% bis 40% reduziert ist.

13. Linearantriebssystem mit einen Linearmotor (907), insbesondere einem tubularen Linearmotor, der einen Motorstator (908) umfasst mit einer Antriebslängsachse, sowie einen Motorläufer (909), der relativ zum Motorstator (908) in Richtung der Antriebslängsachse bewegbar ist, wobei das Linearantriebssystem ferner einen Konstantkraftgeber (900) nach einem der Ansprüche 1 bis 12 umfasst.

14. Linearantriebssystem nach Anspruch 13, wobei der Motorläufer (909) mit dem Läufer (901) des Konstantkraftgebers (900) axial fest verbunden ist.

15. Linearantriebssystem nach Anspruch 13 oder 14, wobei das Linearantriebssystem mindestens zwei Konstantkraftgeber (900) nach einem der Ansprüche 1 bis 12 umfasst, wobei die Läufer (901) der mindestens zwei Konstantkraftgeber (900) axial fest miteinander sowie axial fest mit dem Motorläufer (909) verbunden sind.
